(19) Europäisches Patentamt / European Patent Office / Office européen des brevets

(11) **EP 3 631 671 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(51) Int Cl.:
*G06F 21/64* (2013.01)      *H04L 9/32* (2006.01)

(21) Anmeldenummer: **18716266.4**

(86) Internationale Anmeldenummer:
**PCT/EP2018/058928**

(22) Anmeldetag: **06.04.2018**

(87) Internationale Veröffentlichungsnummer:
**WO 2018/219533 (06.12.2018 Gazette 2018/49)**

(54) **BIDIREKTIONAL VERKETTETE BLOCKCHAIN-STRUKTUR**

BIDIRECTIONALLY LINKED BLOCKCHAIN

STRUCTURE DE CHAÎNE DE BLOCS CONCATÉNÉE DE MANIÈRE BIDIRECTIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2017 DE 102017209381**

(43) Veröffentlichungstag der Anmeldung:
**08.04.2020 Patentblatt 2020/15**

(73) Patentinhaber: **Bundesdruckerei GmbH 10969 Berlin (DE)**

(72) Erfinder:
• **WILKE, Andreas 13509 Berlin (DE)**
• **PAESCHKE, Manfred 16348 Wandlitz (DE)**
• **KOMAROV, Ilya 13507 Berlin (DE)**

(74) Vertreter: **Richardt Patentanwälte PartG mbB Wilhelmstraße 7 65185 Wiesbaden (DE)**

(56) Entgegenhaltungen:
**WO-A1-2016/161073    US-A1- 2016 261 690**

• **JUAN GARAY ET AL: "The Bitcoin Backbone Protocol: Analysis and Applications", INTERNATIONAL ASSOCIATION FOR CRYPTOLOGIC RESEARCH,, Bd. 20160127:132350, 27. Januar 2016 (2016-01-27), Seiten 1-37, XP061019626,**

**Beschreibung**

Die Erfindung betrifft ein Verfahren und ein elektronisches Datenspeichersystem zum Speichern von Daten. Insbesondere betrifft die Erfindung ein Verfahren und ein elektronisches Datenspeichersystem zum manipulationssicheren Speichern von Daten in einer bidirektional verketteten Blockchain-Struktur.

Die Möglichkeit einer Veränderung oder gar gezielten Manipulation von digital codierten Daten in elektronischen Speichern stellt eine technische Herausforderung dar.

Aus dem Stand der Technik sind Blockchain-Strukturen, d. h. Blockketten-Strukturen, zur Sicherung von Daten bekannt. Bei diesen Blockchain-Strukturen handelt es sich um unidirektional verketteten Blockchain-Strukturen. Beispielsweise werden entsprechende Blockchain-Strukturen verwendet, um Transaktionen von Kryptowährungen, wie etwa dem Bitcoin-Zahlungssystem, zu protokollieren.

Eine Blockchain-Struktur stellt dabei eine erweiterbare Liste von Datensätzen bereit, welche in Blöcken angeordnet sind. Die Integrität der einzelnen Blöcke wird im Stand der Technik durch eine unidirektionale Verkettung unter Verwendung kryptografischer Prüfwerten der einzelnen Blöcke in Form von Hashwerten gesichert. Dadurch, dass jeder Block eine kryptografische Prüfwert des vorangehenden Blocks inklusive des in dem vorangehenden Block gespeicherten kryptografischen Prüfwerts umfasst, ergibt sich eine Verkettung der Blöcke. Dabei umfasst jeder Block einen Prüfwert, welcher auf den Inhalten aller vorangehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, weil der Prüfwert jedes nachfolgenden Blocks unter anderem auf dem zu manipulierenden Block beruht. Wird der zu manipulierende Block tatsächlich manipuliert, so ändert sich sein Prüfwert. Dieser geänderte Prüfwert passt nicht mehr zu den Prüfwerten der nachfolgenden Blöcke, wodurch die Manipulation erkennbar wird und bei einer Prüfung mittels der Prüfwerte auffällt.

Bekannte Blockchain-Strukturen implementieren allerdings lediglich eine unidirektionale Verkettung und damit Absicherung der Daten, da bei der Verkettung jeweils nur Dateninhalte vorangehender Blöcke berücksichtigt werden. So lässt sich anhand der Verkettung prüfen, ob ein vorangehender Block einer vorgelegten Blockchain-Struktur manipuliert wurde. Es lässt sich jedoch nicht prüfen, ob die vorgelegten Blockchain-Struktur vollständig ist. Insbesondere lässt sich nicht prüfen, ob möglicherweise ein Teil der Blockchain-Struktur abgeschnitten wurde. Ferner lässt sich nicht prüfen, ob der letzte Block manipuliert wurde.

Bei der Prüfung und Absicherung von Blockchain-Struktur kommen ferner gängige Hashverfahren zum Einsatz. Einzelne Blöcke der Blockchain-Struktur werden über Hashwerte unidirektional miteinander verknüpft. Damit man eine solche Blockchain-Struktur mit unidirektional miteinander verknüpften Blöcken auf Manipulation prüfen kann, benötigt man sowohl sämtliche Informationen der einzelnen Blöcke als auch ihren jeweiligen Hashwert. Des Weiteren macht es eine Prüfung einer solchen Blockchain-Struktur erforderlich mit dem ersten Block der entsprechenden Blockchain-Struktur zu beginnen und mit dem letzten Block aufhören.

Die WO 2016/161073 A1 beschreibt ein Computersystem, das mit einem verteilten Blockchain-Computersystem kommuniziert, das mehrere Computerknoten umfasst. Die Börse speichert ein Auftragsbuch und eine Vielzahl von digitalen Geldbörsen, die verschiedenen Klienten zugeordnet sind. Das Computersystem empfängt neue Datentransaktionsanforderungen, die dem Auftragsbuch hinzugefügt werden. Eine Übereinstimmung zwischen Datentransaktionsanforderungen und Hash-Werte wird identifiziert, die den digitalen Geldbörsen zugeordnet sind, die den jeweiligen Datentransaktionsanforderungen zugeordnet sind. Die Gegenparteien erhalten die Hash-Werte der anderen Partei zusammen mit Informationen über die Übereinstimmung, und jede Partei veranlasst, dass Blockchain-Transaktionen zur Blockchain des Blockchain-Computersystems hinzugefügt werden. Das Computersystem überwacht die Blockchain, um festzustellen, ob beide Seiten der Übereinstimmung zur Blockchain hinzugefügt wurden.

Die US 2016/261690 A1 beschreibt Systeme und Verfahren, die eine Übermittlung von Nachrichten an eine hoch skalierbare Anzahl von Geräten unabhängig von einer zentralisierten Ressource ermöglichen. Ein Computergerät oder eine Mehrzahl von Computergeräten empfangen von einer Verwaltungseinheit eine oder mehrere Nachrichten über eine Blockchain, die von mehreren dezentralen Knoten in einem Peer-to-Peer-Netzwerk verwaltet wird. Das Computergerät oder die Computergeräte führen in der Nachricht identifizierten Anweisungen aus und geben gegebenenfalls Ergebnisse zurück.

"The Bitcoin Backbone Protocol: Analysis and Applications" von Juan Graray et al., Advances in Cryptology - EUROCRYPT 2015, 26. April 2015, beschreibt das Bitcoin-Protokoll und dessen grundlegenden Funktionen, welche als Bitcoin-Backbone bezeichnet werden.

Der Erfindung liegt die Aufgabe zugrunde, ein verbessertes Verfahren zum manipulationssicheren Speichern von Daten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum manipulationssicheren Speichern von Daten in einem elektronischen Speicher unter Verwendung einer bidirektional verketteten Blockchain-Struktur. Das Verfahren umfasst:

- Bereitstellen einer bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen einer ersten blockabhängigen Verkettungsfunktion zum bidirektionalen Verketten des letzten Blocks mit dem zusätzlichen Block, wobei das Berechnen der Verkettungsfunktion umfasst:

  ◦ Berechnen eines kombinierten blockabhängigen Prüfwerts des letzten und des zusätzlichen Blocks unter Verwendung der in dem letzten Block gespeicherten Daten und der in dem zusätzlichen Block zu speichernden Daten,
  ◦ Verknüpfen des kombinierten Prüfwerts mit einer blockunabhängigen verkettungsvorgangsindividuellen Funktion,

- Hinzufügen der ersten blockabhängigen Verkettungsfunktion zu dem letzten Block,
- Hinzufügen der ersten blockabhängigen Verkettungsfunktion zu dem zusätzlichen Block,
- Speichern der um den zusätzlichen Block erweiterten Blockchain-Struktur.

Ausführungsformen können den Vorteil haben, dass sie es ermöglichen, eine bidirektional verkettete Blockchain bereitzustellen, deren Blöcke mittels blockabhängiger bidirektionaler Verkettungsfunktionen miteinander verkettet sind. Die Verkettung ermöglicht dabei eine bidirektionale Prüfung der Blockchain-Struktur auf Echtheit bzw. Manipulation. Dabei kann die Blockchain-Struktur nicht nur in einer Richtung, sondern in zwei Richtung geprüft werden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfwerts, wie etwa eines Hashwertes, des vorangehenden Datensatzes in dem jeweils nachfolgenden Datensatz gesichert ist. Der Prüfwert ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Die Sicherheit Blockchain kann beispielsweise dadurch erhöht werden, dass sie veröffentlicht wird bzw. allgemein zugänglich ist und somit ein Vergleich einer vorliegenden Kopie der Blockchain mit weiteren veröffentlichten bzw. zugänglichen Kopien derselben Blockchain ermöglicht wird.

Ein Prüfwert für Daten ist ein den entsprechenden Daten zugeordneter Wert, welcher die Daten derart eindeutig charakterisiert, dass die Integrität der Daten anhand des Prüfmerkwerts überprüft werden kann. Ein Prüfwert in Form einer Prüfsumme stellt beispielsweise einen Wert bereit, welcher aus den Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von Datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion.

Ein kombinierter blockabhängiger Prüfwert ist ein Prüfwert, welcher sowohl von den Daten eines ersten Blocks als auch von den Daten eines zweiten Blocks abhängt. Nach Ausführungsformen kann es sich dabei um einen Prüfwert handeln, welcher unter Verwendung einer Verknüpfung der zu berücksichtigenden Daten berechnet wird. Nach weiteren Ausführungsformen kann es sich um einen Prüfwert handeln, welcher als eine Verknüpfung einer Mehrzahl von Prüfwerten berechnet wird, z.B. einer Verknüpfung eines ersten Prüfwerts der Daten eines ersten Blocks mit einem zweiten Prüfwert der Daten eines zweiten Blocks. Bei einer solchen Verknüpfung kann es sich beispielsweise um eine arithmetische Verknüpfung, wie Addition, Subtraktion, Multiplikation und/oder Division handeln.

Im Falle einer unidirektional verketteten Blockchain-Struktur wird ein Prüfwert unter Verwendung eines Blocks der Blockchain-Struktur berechnet und zu einem mit diesem Block unidirektional zu verkettenden zusätzlichen Block hinzugefügt. Anhand des Prüfwerts des hinzugefügten Blocks kann die Integrität des Blocks bzw. der Daten des entsprechenden Blocks geprüft werden, mit welchem der hinzugefügte Block unidirektional verkettet ist. Hierzu wird beispielsweise unter Verwendung der Daten des entsprechenden Blocks der Prüfwert nachgerechnet und mit dem von dem hinzugefügten Block bereitgestellten Prüfwert verglichen. Stimmen beide Prüfwerte überein, ist die Integrität des Blocks bzw. der Daten des entsprechenden Blocks gewahrt, mit welchem der hinzugefügte Block unidirektional verkettet ist.

Im Falle der bidirektional verketteten Blockchain-Struktur gemäß Ausführungsformen wird ein Prüfwert nicht nur unter Verwendung von Daten des letzten Blocks der Blockchain-Struktur, sondern auch unter Verwendung von Daten des mit diesem Block bidirektional zu verkettenden zusätzlichen Blocks berechnet. Anhand eines solchen kombinierten Prüfwerts des hinzugefügten Blocks kann die Integrität des Blocks bzw. die Daten des entsprechenden Blocks, mit welchen der hinzugefügte Block bidirektional verkettet ist, in Abhängigkeit von den Daten des hinzugefügten Blocks geprüft werden. Hierzu wird beispielsweise unter Verwendung der Daten des entsprechenden Blocks und der Daten des hinzugefügten Blocks die blockabhängige Verkettungsfunktion, welche den Prüfwert umfasst, nachgerechnet und mit der von dem hinzugefügten Block bereitgestellten blockabhängigen Verkettungsfunktion verglichen. Stimmen beide Verkettungsfunktionen überein, ist die Integrität des Blocks bzw. der Daten des entsprechenden Blocks, mit welchen der hinzugefügte Block bidirektional verkettet ist, ebenso wie die Integrität des zusätzlichen Blocks bzw. der Daten des zusätzlichen Blocks gewahrt.

Wird eine bidirektionale Verkettungsfunktion sowohl zu dem zusätzlichen Block hinzugefügt als auch zu dem Block, mit welchem der zusätzliche Block bidirektional verkettet wird, so kann eine Integritätsprüfung auch auf Basis der zu dem entsprechenden Block der Blockchain-Struktur hinzugefügten bidirektionalen Verkettungsfunktion erfolgen. Mit anderen Worten kann bei einer bidirektionalen Verkettung zweier Blöcke eine Integritätsprüfung sowohl ausgehend von der in einem ersten der beiden Blöcke gespeicherten bidirektionalen Verkettungsfunktion ausgeführt werden, als auch ausgehend von der in dem zweiten der beiden Blöcke gespeicherten bidirektionalen Verkettungsfunktion.

Anhand des kombinierten Prüfwerts, welcher Eingang in die Berechnung der blockabhängigen bidirektionalen Verkettungsfunktion findet, des letzten Blocks, mit welchem der hinzugefügte Block bidirektional verkettet ist, kann im Gegensatz zu bekannten unidirektional verketteten Blockchain-Strukturen auch erkannt werden, ob die Blockchain-Struktur abgeschnitten wurde. Da die Prüfwerte im Fall bekannter unidirektional verketteter Blockchain-Strukturen jeweils nur Informationen über vorangehende Blöcke umfassen, kann auf Basis eines solchen Prüfwerts nicht erkannt werden, ob nachfolgende Blöcke existieren. Somit kann auch nicht erkannt werden, wenn nachfolgende Blöcke im Zuge eine Manipulation verändert, ersetzt oder entfernt werden. Demgegenüber umfassen die kombinierten Prüfwerte der bidirektionalen Verkettungsfunktionen gemäß Ausführungsformen, jeweils Informationen über beide miteinander verkettete Blöcke. Ferner wird die Verkettungsfunktion zu jedem der beiden entsprechenden Blöcke jeweils hinzugefügt. Wird ein hinzugefügter Block im Zuge eine Manipulation verändert, ersetzt oder entfernt, so kann dies anhand der Verkettungsfunktion des Blocks, mit welchem der hinzugefügte Block bidirektional verkettet ist, erkannt werden.

Nach Ausführungsformen umfasst jeder der inneren Blöcke der Blockchain-Struktur, d.h. alle Blöcke außer dem ersten und letzten Block, zumindest zwei blockabhängige Verkettungsfunktionen, da die inneren Blöcke jeweils mit einem vorangehenden und einem nachfolgenden Block durch unterschiedliche Verkettungsfunktionen verkettet sind. Im Gegensatz zu bekannten ausschließlich hashwertbasierten Verkettungsverfahren für Blockchain-Strukturen werden im vorliegenden Fall keine Einzelwerte zu den Blöcken hinzugefügt, sondern Funktionen, welche von zumindest einer Variablen abhängig sind, welche für die Verkettung nicht festgelegt wird. Umfasst ein Block mehrere blockabhängige Verkettungsfunktionen, so können diese miteinander verknüpft werden. Somit ergibt sich aus dem Spektrum der miteinander verknüpften Verkettungsfunktionen der einzelnen Verbindungen eine gemeinsam resultierende Verkettungsfunktion, welche die Informationen aller beitragenden Verkettungsfunktionen der einzelnen Verbindungen vollständig umfasst. Bei einer entsprechenden Verknüpfung kann es sich beispielsweise um eine arithmetische Verknüpfung, wie Addition, Subtraktion, Multiplikation und/oder Division handeln.

Nach Ausführungsformen umfassen die Daten, welche bei der Berechnung der Prüfwerte berücksichtigt werden, eine echte Untermenge der Daten der entsprechenden Blöcke. Nach weiteren Ausführungsformen umfassen die Daten, welche bei der Berechnung des Prüfwerts berücksichtigt werden, alle Daten der entsprechenden Blöcke. Nach Ausführungsformen umfassen die Daten des letzten Blocks der Blockchain-Struktur, welche zur Berechnung des kombinierten blockabhängigen Prüfwerts berücksichtigt werden, die blockabhängige Verkettungsfunktion des letzten Blocks mit einem vorletzten Block der Blockchain-Struktur. Nach Ausführungsformen umfassen die Daten des letzten Blocks, welche bei der Berechnung des kombinierten blockabhängigen Prüfwerts berücksichtigt werden, nicht die Verkettungsfunktion der Verkettung des letzten Blocks mit dem vorletzten Block.

Nach Ausführungsformen umfasst der letzte Block der Blockchain-Struktur ferner eine zweite blockabhängige Verkettungsfunktion der bidirektionalen Verkettung des letzten Blocks mit einem vorletzten Block der Blockchain-Struktur, wobei das Hinzufügen der ersten blockabhängigen Verkettungsfunktion zu dem letzten Block ein Verknüpfen der ersten blockabhängigen Verkettungsfunktion mit der zweiten blockabhängigen Verkettungsfunktion umfasst.

Nach Ausführungsformen umfasst jeder der inneren Blöcke der Blockchain-Struktur, d.h. alle Blöcke außer dem ersten und letzten Block, zumindest zwei blockabhängige Verkettungsfunktionen, da die inneren Blöcke jeweils mit einem vorangehenden und einem nachfolgenden Block durch unterschiedliche Verkettungsfunktionen verkettet sind. Im Gegensatz zu bekannten ausschließlich hashwertbasierten Verkettungsverfahren für Blockchain-Strukturen werden im vorliegenden Fall keine Einzelwerte zu den Blöcken hinzugefügt, sondern Funktionen, welche von zumindest einer Variablen abhängig sind, welche für die Verkettung nicht festgelegt wird. Umfasst ein Block mehrere blockabhängige Verkettungsfunktionen, so können diese miteinander verknüpft werden. Somit ergibt sich aus dem Spektrum der miteinander verknüpften Verkettungsfunktionen der einzelnen Verbindungen eine gemeinsam resultierende Verkettungsfunktion, welche die Informationen aller beitragenden Verkettungsfunktionen der einzelnen Verbindungen vollständig umfasst. Bei einer entsprechenden Verknüpfung kann es sich beispielsweise um eine arithmetische Verknüpfung, wie Addition, Subtraktion, Multiplikation und/oder Division handeln.

Nach Ausführungsformen ist die blockunabhängige verkettungsvorgangsindividuelle Funktion eine Funktion einer Funktionenschar, welche einen Mehrzahl von blockunabhängigen verkettungsvorgangsindividuellen Funktionen umfasst, wobei jeder Funktion der Funktionenschar jeweils eine Ordnungszahl zugeordnet ist und die Funktionen der Funktionenschar beginnenden mit einer ersten Ordnungszahl, welche einer ersten bidirektionalen Verkettung der bidirektional verketteten Blockchain-Struktur zwischen einem ersten und einem zweiten Block der Kettenstruktur zugeordnet ist, gemäß einer vordefinierten Zuordnungsvorschrift dazu vorgesehen sind, in aufsteigender Ordnung jeweils individuell einer bidirektionalen Verkettung zweier Blöcke der bidirektional verketteten Blockchain-Struktur zugeordnet und zum Berechnen einer von den entsprechenden zwei Blöcken abhängigen Verkettungsfunktion verwendet zu werden.

Ausführungsformen können ferner den Vorteil haben, dass durch die Verknüpfung des kombinierten Prüfwerts mit einer blockunabhängigen verkettungsvorgangsindividuellen Funktion ein sicheres Verkettungsverfahren durch komplexere und sichere Verkettungsfunktionen implementiert werden kann. Unter einer blockunabhängigen verkettungsvorgangsindividuellen Funktion wird hier eine mathematische Funktion mit zumindest einer Variablen verstanden. Die Funktion ist insofern verkettungsvorgangsindividuell, als dass für jeden Verkettungsvorgang, d.h. für jede bidirektionale Verbindung zwischen zwei Blöcken der Blockchain-Struktur eine andere Funktion Verwendung findet. Nach Ausführungsformen umfassen alle verkettungsvorgangsindividuellen Funktionen dabei dieselben Variablen. Nach Ausführungsformen werden die verkettungsvorgangsindividuellen Funktionen aus einer gemeinsamen übergreifenden Funktion bzw. Funktional abgeleitet, sodass die resultierenden verkettungsvorgangsindividuellen Funktionen eine Funktionenschar bilden. Nach Ausführungsformen sind die Funktionen der Funktionenschar den Verbindungen der Blockchain-Struktur gemäß einer vordefinierten Zuordnungsvorschrift zugeordnet. Nach Ausführungsformen sind die Funktionen der Funktionenschar gemäß der Reihenfolge der Verbindungen der Blockchain-Struktur geordnet. Auf Basis dieser Ordnung kann eindeutig festgelegt sein, welche verkettungsvorgangsindividuelle Funktion für welchen Verkettungsvorgang angewendet wird. Nach Ausführungsformen ist die bidirektionale Verkettung zwischen den Blöcken der Blockchain-Struktur somit nicht nur von den Dateninhalten der beiden miteinander zu verkettenden Blöcke abhängig, sondern auch von der Rangfolge der entsprechenden Verbindung zwischen den Blöcken innerhalb der Blockchain-Struktur, d.h. von der Position der Blöcke innerhalb der Blockchain-Struktur.

Nach Ausführungsformen umfasst die blockunabhängige verkettungsvorgangsindividuelle Funktion ein Polynom M-ter Ordnung, wobei M eine natürliche Zahl ist, welche die der Funktion zugeordnete Ordnungszahl bildet.

Nach Ausführungsformen umfasst die blockunabhängige verkettungsvorgangsindividuelle Funktion eine Verknüpfung des Polynoms M-ter Ordnung mit einer Exponentialfunktion, wobei der Exponent der Exponentialfunktion ein Polynom der Ordnung größer-gleich zwei umfasst. Bei einer entsprechenden Verknüpfung kann es sich beispielsweise um eine Multiplikation handeln.

Ausführungsformen können den Vorteil haben, dass die Ordnungszahl der blockunabhängigen verkettungsvorgangsindividuellen Funktion unter Verwendung der Ordnung des Polynoms festgelegt werden kann. Dies stellt eine klare Zuordnung der Verkettungsfunktionen zu den einzelnen Verkettungsvorgängen beim Bilden der Blockchain-Struktur bereit. Beispielsweise kann die Ordnung des Polynoms identisch mit der Ordnungszahl sein. Somit wäre der ersten Verbindung der Blockchain-Struktur mit der Ordnungszahl 1 ein Polynom erster Ordnung zugeordnet bzw. eine Verkettungsfunktion, welche ein Polynom erste Ordnung umfasst. Nach weiteren Ausführungsformen kann die Ordnungszahl als Ordnung des Polynoms minus einer vordefinierten Zahl festgelegt sein. Handelt es sich hierbei beispielsweise um die Zahl 10, so wäre der ersten Verbindung der Blockchain-Struktur mit der Ordnungszahl 1 ein Polynom elfter Ordnung zugeordnet bzw. eine Verkettungsfunktion, welche ein Polynom elfter Ordnung umfasst. Nach Ausführungsformen legt die Zuordnungsvorschrift zu den einzelnen Verbindungen der Blockchain-Struktur ferner fest, welchen Wert die Koeffizienten der Polynome haben. Eine entsprechende Vorschrift kann durch die gemeinsame übergreifende Funktion festgelegt werden.

Nach Ausführungsformen ist für die gemeinsame übergreifende Funktion, welche zur Bildung der blockabhängigen Verkettungsfunktionen, genauer gesagt der blockunabhängigen verkettungsvorgangsindividuellen Funktionen, verwendet wird, ein Aufsteigeoperator und ein Absteigeoperator vorgesehen, welche beliebige verkettungsvorgangsindividuelle Funktionen um eine Ordnung oder mehrere Ordnungen herauf- bzw. herabsetzen können. Eine Anwendung eines solchen Aufsteigeoperator oder Absteigeoperators auf eine blockunabhängige verkettungsvorgangsindividuelle Funktion resultiert somit in einer blockunabhängigen verkettungsvorgangsindividuellen Funktion höherer bzw. niedrigerer Ordnung, wobei sowohl diese Ausgangsfunktion, als auch die Endfunktion von der gemeinsamen übergreifenden Funktion umfasst werden.

Die Verwendung von blockunabhängigen verkettungsvorgangsindividuellen Funktionen auf Basis von Polynomen kann ferner den Vorteil haben, dass die entsprechenden Polynome ineinander transformiert werden können. Durch eine Ableitungsoperation kann ein Polynom M-ter Ordnung in ein Polynom (M-1)-ter Ordnung transformiert werden. Ferner kann ein Polynom M-ter Ordnung durch Multiplikation mit der entsprechenden Variablen, beispielsweise x, in ein Polynom (M+1)-ter Ordnung transformiert werden. Nach Ausführungsformen umfassen die Transformationsfunktionen eine Kombination aus der entsprechenden Variablen, d.h. ein Polynom erster Ordnung, beispielsweise x, und eines Ableitungsoperators, beispielsweise $\frac{d}{dx}$. Im Folgenden werden Transformationsfunktionen, welche eine Funktion M-ter Ordnung, beispielsweise ein Polynom M-ter Ordnung, in eine Funktion (M+1)-ter Ordnung transformieren als Aufsteigeoperatoren bezeichnet und Transformationsfunktionen, welche eine Funktion M-ter Ordnung, beispielsweise ein Polynom M-ter Ordnung, in eine Funktion (M-1)-ter Ordnung transformieren als Absteigeoperatoren bezeichnet.

Nach Ausführungsformen können die Aufsteigeoperatoren und Absteigeoperatoren ein Polynom M-ter Ordnung in ein Polynom (M+P)-ter Ordnung bzw. (M-P)-ter Ordnung transformieren, wobei P eine natürliche Zahl größer-gleich zwei bezeichnet. Nach Ausführungsformen umfassen die Transformationsfunktionen in diesem Fall eine Kombination aus einer P-ten Potenz der entsprechenden Variablen, d.h. ein Polynom erster Ordnung, beispielsweise $x^P$, und eines Ableitungsoperators der Ordnung P, beispielsweise $\frac{d^P}{dx^P}$

Nach Ausführungsformen umfasst das Berechnen des kombinierten blockabhängigen Prüfwerts des letzten und des zusätzlichen Blocks ein Anwenden einer Hashfunktion auf die in dem letzten Block gespeicherten Daten und die in dem zusätzlichen Block zu speichernden Daten. Ausführungsformen können den Vorteil haben, dass das Verwenden eines Hashwerts zum Bilden des kombinierten Prüfwerts ein einfaches und sicheres Verfahren bereitstellt, um den Daten der miteinander zu verkettenden Blöcke einen eindeutigen Prüfwert zuzuordnen.

Nach Ausführungsformen sind die Daten in den Blöcken der Blockchain-Struktur jeweils in einer quadratische (TxT)-Matrixstruktur gespeichert, wobei T eine natürliche Zahl größer-gleich zwei ist. Ferner umfasst das Berechnen des kombinierten blockabhängigen Prüfwerts des letzten und des zusätzlichen Blocks:

◦ Berechnen einer Summe über jede Spalte einer ersten Matrixstruktur, welche von den beiden Matrixstrukturen der in dem letzten Block gespeicherten Daten und der in dem zusätzlichen Block zu speichernden Daten bereitgestellt wird,

◦ Berechnen einer Summe über jede Zeile einer zweiten Matrixstruktur, welche von den beiden Matrixstrukturen der in dem letzten Block gespeicherten Daten und der in dem zusätzlichen Block zu speichernden Daten bereitgestellt wird,

◦ Berechnen der kombinierten Summe aus der Summe der i-ten Spalte und der Summe der i-ten Zeile, wobei i eine natürliche Zahl ist und von 1 bis T läuft,

◦ Bilden des kombinierten blockabhängigen Prüfwerts durch Verknüpfen der kombinierten Summen miteinander.

Ausführungsformen können den Vorteil haben, dass durch unterschiedliche Summationsregeln für die beiden miteinander zu verkettenden Blöcken, beispielsweise einerseits eine Summenbildung über die einzelnen Spalten und andererseits eine Summenbildung über die einzelnen Zeilen, der resultierende kombinierte Prüfwert nicht nur Informationen über die Daten der miteinander zu verkettenden Blöcke umfasst, sondern auch Informationen über deren Reihenfolge. Wird die Reihenfolge der beiden Blöcke vertauscht, so erfolgt beispielsweise für den vormals vorangehenden Block keine spalten-, sondern eine zeilenweise Summenbildung, während für den vormals nachfolgenden, nun aber vorangehenden Block eine spaltenweise statt eine zeilenweise Summenbildung erfolgt.

Nach Ausführungsformen können die miteinander zu verkettenden Blöcke auch Matrixstrukturen unterschiedlicher Größe aufweisen. Beispielsweise sind die Daten eines Blocks in einer (VxW)-Matrixstruktur gespeichert, während die Daten des anderen Blocks in einer (XxY)-Matrixstruktur gespeichert sind, wobei V, W, X, Y natürliche Zahlen größer-gleich zwei sind. In diesem Fall kann für die Bildung des kombinierten Prüfwerts bestimmt werden, welche der Zahlen V, W, X, oder Y am größten ist, die Anzahl an Zeilen V oder X oder die Anzahl an Spalten W oder Y. Falls die Zeilen- und Spaltenzahlen identisch sind, sind keine zusätzlichen Verfahrensschritte notwendig. Ist die Anzahl der Spalten und/oder Zeilen für die beiden Matrixstrukturen unterschiedlich werden die Matrixstrukturen jeweils um so viele Zeilen und/oder Spalten erweitert, dass alle Spalten- und Zeilenzahlen identisch mit der zuvor bestimmten größten Zahl sind. Dabei wird allen ergänzten Matrixelementen ein festgelegter Platzhalterwert zugeordnet, z. B. der Wert 0. Im Ergebnis erhält man so zwei quadratische Matrixstrukturen identischer Größe, auf welche das zuvor genannte Verfahren für quadratische (TxT)-Matrixstrukturen angewendet werden kann.

Nach Ausführungsformen umfasst das Verknüpfen der kombinierten Summen miteinander ein Aneinanderreihen der kombinierten Summen umfasst. Ausführungsformen können den Vorteil haben, dass sie ein einfaches und eindeutiges Verfahren zum Bilden des kombinierten Prüfwerts bereitstellen.

Nach Ausführungsformen sind aufeinanderfolgende Blöcke der bidirektional verketteten Blockchain-Struktur jeweils bidirektional miteinander verkettet, wobei zwei bidirektional miteinander verkettete Blöcke jeweils beide eine gemeinsame blockabhängige Verkettungsfunktion umfassen, wobei die gemeinsame blockabhängige Verkettungsfunktion jeweils einen kombinierten blockabhängigen Prüfwert der in den beiden aufeinanderfolgenden Blöcke gespeicherten Daten umfasst.

Nach Ausführungsformen wird die Blockchain-Struktur durch eine verkürzte Blockchain-Struktur ersetzt, wobei die verkürzte Blockchain-Struktur um zumindest ein inneres Kettensegment der Blockchain-Struktur verkürzt ist, wobei das innere Kettensegment zumindest einen Block umfasst.

Ausführungsformen können den Vorteil haben, dass durch Verkürzen der Blockchain-Struktur beispielsweise Speicherplatz gespart werden kann. Ferner kann anhand der Verkettungsfunktionen, zwischen welchen das innere Kettensegment entnommen wurde, ermittelt werden, wie viele Blöcke das entsprechende Segment umfasst. Werden beispielsweise L-Blöcke entnommen, so muss ein L-faches Anwenden des Aufsteigeoperators auf die verkettungsvorgangsindividuelle Verkettungsfunktion des letzten Blocks der Blockchain-Struktur vor den entnommenen Blöcken in der verkettungsvorgangsindividuellen Funktion des ersten Blocks der Blockchain-Struktur nach den entnommenen Blöcken resultieren. Dasselbe gilt analog für eine L-fache Anwendung des Absteigeoperators auf die verkettungsvorgangsindividuelle Funktion des ersten Blocks nach den entnommenen Blöcken.

Ausführungsformen können ferner den Vorteil haben, dass durch die Verkürzung der Blockchain-Struktur beispielsweise Blöcke mit sicherheitssensiblen Daten entnommen werden können, um diese vor unautorisierten Zugriffen zu schützen. Die Verwendung der verkettungsvorgangsindividuellen Funktionen erlaubt, es festzustellen, wie viele Blöcke entnommen wurden. Ferner ermöglicht die Verwendung der kombinierten blockabhängigen Prüfwerte entnommene Blöcke später auf ihre Authentizität bzw. Integrität hin zu prüfen. Werden entnommene Blöcke später bzw. zusätzlich zur Verfügung gestellt, so kann anhand der Verkettungsfunktionen geprüft werden, ob es sich tatsächlich um die entnommenen Blöcke handelt. Ferner kann bei einem Bereitstellen allein der entnommenen Blöcke anhand der verkettungsvorgangsindividuellen Funktionen festgestellt werden, aus welchem Bereich einer Blockchain-Struktur die Blöcke entnommen werden. Ferner kann, falls die gemeinsame übergreifende Funktion, aus welcher die verkettungsvorgangsindividuellen Funktionen abgeleitet werden, Blockchain-individuell gewählt wird, anhand der Verkettungsfunktionen festgestellt werden, zu welcher Blockchain-Struktur entnommene Blöcke gehören. Die gemeinsame übergreifende Funktion stellt somit eine Art Fingerabdruck der entsprechenden Blockchain-Struktur dar, welcher unabhängig von den in der Blockchain-Struktur gespeicherten Daten ist. Derartige Möglichkeiten können insbesondere vorteilhaft sein, falls die in den Blöcken der Blockchain-Struktur gespeicherten Daten verschlüsselt sind.

Wird ein inneres Kettensegment entnommen, so fehlt für die die beiden Blöcke der Blockchain-Struktur, zwischen denen das entsprechende innere Kettensegment entnommen wird, Aufgrund der Entnahme jeweils ein nachfolgender bzw. vorangehender Block, welcher aufgrund der bidirektionalen Verkettung dieselbe blockabhängige Verkettungsfunktion umfasst. Nach Ausführungsformen werden die beiden Blöcke der verkürzten Blockchain-Struktur, zwischen denen das innere Kettensegment entnommen wurde, mit einer kombinierten bidirektionalen Verkettungsfunktion verkettet, welche eine Kombination aller blockabhängigen Verkettungsfunktionen der Blöcke des entnommen inneren Kettensegments umfasst.

Ausführungsformen können den Vorteil haben, dass die Blockchain-Struktur verkürzt werden kann, ohne dass die blockabhängigen Informationen über die Verkettungen der entnommenen Blöcke verloren gehen. Bei der Kombination der blockabhängigen Verkettungsfunktionen der Blöcke des inneren Verkettungssegments kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen. Die blockabhängigen Verkettungsfunktionen sind jeweils abhängig von Dateninhalten der Blöcke, welche sie verketten, bzw. von Dateninhalten, welche diesen Blöcke eindeutig zugeordnet sind. Als Kombination aller blockabhängigen Verkettungsfunktionen der Blöcke des inneren Kettensegments umfasst die kombinierte bidirektionale Verkettungsfunktion, welche die beiden nach der Entnahme des inneren Kettensegments verbleibenden Blöcke ohne direkte Verkettung miteinander verkettet, somit Informationen über alle Dateninhalte aller zwischen den entsprechenden Blöcken entnommenen Blöcke des inneren Kettensegments.

Nach Ausführungsformen umfasst das Verfahren ferner:

- Bereitstellen von blockunabhängigen Transformationsfunktionen, welche dazu konfiguriert sind, die blockunabhängigen verkettungsvorgangsindividuellen Funktionen der blockabhängigen Verkettungsfunktionen ineinander zu transformieren,
- Prüfen der verkürzte Blockchain-Struktur auf Konsistenz, wobei die blockunabhängigen verkettungsvorgangsindividuellen Funktionen der blockabhängigen Verkettungsfunktionen zweier direkter Nachbarblöcke der verkürzten Blockchain-Struktur, zwischen denen das innere Kettensegment entnommen wurde, unter Verwendung der Transformationsfunktionen ineinander transformiert und die Transformationsergebnisse auf Konsistenz geprüft werden.

Ausführungsformen können den Vorteil haben, dass die Möglichkeit geschaffen wird, sicherheitskritische Informationen aus der Blockchain-Struktur zu entnehmen, die verbleibende verkürzte Blockchain-Struktur zugleich aber weiterhin prüfbar bleibt.

Nach Ausführungsformen sind die blockunabhängigen Transformationsfunktionen dazu konfiguriert, die blockunabhängigen verkettungsvorgangsindividuellen Funktionen der blockabhängigen Verkettungsfunktionen jeweils als Aufsteigeoperatoren in eine nächsthöhere blockunabhängigen verkettungsvorgangsindividuelle Funktion gemäß der aufsteigenden Ordnung zu transformieren und/oder als Absteigeoperatoren die blockunabhängigen verkettungsvorgangsindividuellen Funktionen der blockabhängigen Verkettungsfunktionen jeweils in eine nächsttiefere blockunabhängigen verkettungsvorgangsindividuelle Funktion gemäß der aufsteigenden Ordnung zu transformieren.

Ausführungsformen können den Vorteil haben, dass ein effizientes Prüfungsverfahren unter Verwendung der Aufsteige- und Absteigeoperatoren bereitgestellt wird.

Nach Ausführungsformen weist die blockabhängige Verkettungsfunktion $k_M(x)$ die folgende Form auf:

$$k_M(x) = g(D_N, D_{N+1})\, f_M(x)$$

wobei $g(D_N, D_{N+1})$ den kombinierten blockabhängigen Prüfwert des N-ten und (N+1)-ten Block der Blockchain-Struktur, $D_N$ die in dem N-ten Block gespeicherten Daten und $D_{N+1}$ die in dem (N+1)-ten Block zu speichernden Daten bezeichnet, wobei die blockunabhängige verkettungsvorgangsindividuelle Funktion $f_M(x)$ folgende Form aufweist:

$$f_M(x) = c\, H_M\!\left(\sqrt{b}\, x\right) e^{\frac{1}{2} b\, x^2},$$

wobei M eine natürliche Zahl bezeichnet, welche eindeutig dem individuellen Verkettungsvorgang zugeordnet ist, wobei b und c jeweils einen festgelegten Parameter und x eine Variable bezeichnet und wobei $H_M\!\left(\sqrt{b}\, x\right)$ ein Hermitesches Polynom mit folgender Form bezeichnet:

$$H_M\!\left(\sqrt{b}\, x\right) = (-1)^M e^{b\, x^2} \frac{d^M}{d(\sqrt{b}\, x)^M}\left(e^{-b\, x^2}\right).$$

Ausführungsformen können den Vorteil haben, dass durch die Verwendung einer blockabhängigen Verkettungsfunktion, welche Hermitesche Polynome umfasst, ein effizientes Prüfverfahren bereitgestellt werden kann.

Nach Ausführungsformen umfassen die Transformationsfunktionen einen Aufsteigeoperator der Form:

$$\hat{a}^{\dagger} = \sqrt{\frac{b}{2}}\left(x - b^{-1} \frac{d}{dx}\right)$$

und einen Absteigeoperator der Form:

$$\hat{a} = \sqrt{\frac{b}{2}}\left(x + b^{-1} \frac{d}{dx}\right).$$

Ferner ist Konsistenz zwischen dem N-ten und dem (N+L)-ten Block, zwischen denen ein inneres Kettensegment mit den Blöcken N+1 bis N+L-1 entnommen wurde, gegeben, falls

$$\frac{\left(\hat{a}^{\dagger}\right)^{L-1} k_M(x)}{k_{M+L-1}(x)} = \frac{c\, k_M(x)}{(\hat{a})^{L-1}\, k_{M+L-1}(x)}$$

gilt, wobei c eine Konstante ist.

Nach Ausführungsformen ist die blockunabhängige verkettungsvorgangsindividuelle Funktion $f_M(x)$ beispielsweise:

$$f_M(x)=\left(\frac{b}{\pi}\right)^{\frac{1}{4}} \frac{1}{\sqrt{2^M\, M!}}\, H_M\!\left(\sqrt{b}\, x\right)\, e^{-\frac{1}{2}b\, x^2}.$$

Hierbei gilt $\hat{a}^{\dagger}\, f_M(x)=\sqrt{M+1}\; f_{M+1}(x)$ und $\hat{a}\, f_M(x)=\sqrt{M}\; f_{M-1}(x)$.

Werden beispielsweise zwischen den Block N und dem Block N+3 die beiden Blöcke N+1 und N+2 entnommen, so umfasst der verbleibende Block N nach wie vor die blockabhängige bidirektionale Verkettungsfunktion $k_M(x)=g(D_N, D_{N+1})\, f_M(x)$ der bidirektionalen Verbindung zwischen dem Block N und dem Block N+1. Der verbleibende Block N+3 umfasst nach wie vor die blockabhängige bidirektionale Verkettungsfunktion $k_{M+2}(x)=g(D_{N+2}, D_{N+3})\, f_{M+2}(x)$.

Sind die kombinierten Prüfwerte unabhängig von x so gelten die Kommutationsregeln:

$$\hat{a}^{\dagger}\, g(D_N, D_{N+1}) = g(D_N, D_{N+1})\, \hat{a}^{\dagger},$$

$$\hat{a}\, g(D_N, D_{N+1}) = g(D_N, D_{N+1})\, \hat{a}.$$

Je nach Ausführungsform kann der kombinierte Prüfwert $g(D_N, D_{N+1})$ als eine Verknüpfung zweier Prüfwerte der entsprechenden Daten, d.h.
$g(D_N, D_{N+1}) = g(D_N) \circ g(D_{N+1})$, oder als ein Prüfwert einer Verknüpfung der entsprechenden Daten selbst gegeben sein, d.h. $g(D_N, D_{N+1}) = g(D_N \circ D_{N+1})$.
Für ein zweifaches Anwenden des Aufsteigeoperators auf $k_M(x)$ gilt:

$$\left(\hat{a}^{\dagger}\right)^2 k_M(x)=g(D_N, D_{N+1})\left(\hat{a}^{\dagger}\right)^2 f_M(x) = g(D_N, D_{N+1})\, \sqrt{M+1}\, \sqrt{M+2}\, f_{M+2}(x)$$

Für ein zweifaches Anwenden des Absteigeoperators auf $k_{M+2}(x)$ gilt

$$(\hat{a})^2\, k_{M+2}(x)=g(D_{N+2}, D_{N+3})\,(\hat{a})^2 f_{M+2}(x) = g(D_{N+2}, D_{N+3})\, \sqrt{M+2}\, \sqrt{M+1}\, f_M(x).$$

Damit gilt

$$\frac{k_{M+2}(x)}{\left(\hat{a}^{\dagger}\right)^2 k_M(x)} = \frac{g(D_{N+2}, D_{N+3})}{g(D_N, D_{N+1})\, \sqrt{M+1}\, \sqrt{M+2}} = \frac{d_{M+2}}{\sqrt{M+1}\, \sqrt{M+2}},$$

mit $d_{M+2} = g(D_{N+2}, D_{N+3})/\, g(D_N, D_{N+1})$ und

$$\frac{k_M(x)}{(\hat{a})^2\, k_{M+2}(x)} = \frac{g(D_N, D_{N+1})}{g(D_{N+2}, D_{N+3})\, \sqrt{M+2}\, \sqrt{M+1}} = \frac{d_{M+2}^{-1}}{\sqrt{M+1}\, \sqrt{M+2}}.$$

Hieraus folgt:

$$\frac{\sqrt{M+1}\;\sqrt{M+2}\;k_{M+2}(x)}{\left(\hat{a}^\dagger\right)^2 k_M(x)}\;\frac{\sqrt{M+1}\;\sqrt{M+2}\;k_M(x)}{(\hat{a})^2\,k_{M+2}(x)} = 1.$$

Für den verallgemeinerten Fall, dass zwischen dem N-ten Block und dem (N+L)-ten Block L-1 Blöcke entnommen werden ergibt sich mit $k_{M+L-1}(x)=g(D_{N+L-1}, D_{N+L})\, f_{M+L-1}(x)$:

$$\left(\hat{a}^\dagger\right)^{L-1} k_M(x)=g(D_N,D_{N+L})\left(\hat{a}^\dagger\right)^{L-1} f_M(x) = g(D_N,D_{N+L})\sqrt{\frac{(M+L-1)!}{M!}}\, f_{M+L-1}(x)$$

und

$$(\hat{a})^{L-1} k_{M+L-1}(x)=g(D_{N+L-1},D_{N+L})\,(\hat{a})^{L-1} f_{M+L-1}(x) = g(D_{N+L})\sqrt{\frac{(M+L-1)!}{M!}}\, f_M(x),$$

woraus folgt:

$$\frac{k_{M+L-1}(x)}{\left(\hat{a}^\dagger\right)^{L-1} k_M(x)} = \sqrt{\frac{M!}{(M+L-1)!}}\;\frac{g(D_{N+L-1},D_{N+L})}{g(D_N,D_{N+L})} = \sqrt{\frac{M!}{(M+L-1)!}}\, d_{M+L-1}$$

und

$$\frac{k_M(x)}{(\hat{a})^{L-1} k_{M+L-1}(x)} = \sqrt{\frac{M!}{(M+L-1)!}}\;\frac{g(D_{N+L-1},D_{N+L})}{g(D_{N+L-1},D_{N+L})} = \sqrt{\frac{M!}{(M+L-1)!}}\, d_{M+L-1}^{-1}$$

mit $d_{M+2} = g(D_{N+L-1}, D_{N+L}) / g(D_{N+L-1}, D_{N+L})$ bzw.

$$\left[\sqrt{\frac{(M+L-1)!}{M!}}\;\frac{k_{M+L-1}(x)}{\left(\hat{a}^\dagger\right)^{L-1} k_M(x)}\right]\left[\sqrt{\frac{(M+L-1)!}{M!}}\;\frac{k_M(x)}{(\hat{a})^{L-1} k_{M+L-1}(x)}\right] = 1.$$

Ausführungsformen können den Vorteil haben, dass durch Verwenden des entsprechenden Aufsteigeoperators und des entsprechenden Absteigeoperators ein effizientes Transformationsverfahren zum Transformieren der verkettungsvorgangsindividuellen Funktionen unterschiedlicher Ordnung ineinander bereitgestellt wird. Ist die Anzahl der entnommenen Blöcke bekannt, so können die verbleibenden Blöcke auf Konsistenz geprüft werden. Andererseits kann durch schrittweises Erhöhen der Anwendung des Aufsteigeoperators und/oder Absteigeoperators die Anzahl der entnommenen Blöcke bestimmt werden. Sobald das zuvor definierte Konsistenzkriterium erfüllt ist, entspricht die Anzahl der Anwendungen des Aufsteigeoperators und/oder Absteigeoperators der Anzahl der entnommenen Blöcke.

Nach Ausführungsformen umfassen die zu speichernden Daten Daten, welche kennzeichnend für den Inhalt eines digital codierten Dokuments sind, wobei das Bereitstellen der zu speichernden Daten ein Empfangen der Daten mittels einer Kommunikationsschnittstelle über ein Netzwerk von einem das digital codierte Dokument erstellenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten die Integrität eines digital codierten Dokuments geprüft werden kann. Für ein vorliegendes digital codiertes Dokument können Daten, welche kennzeichnend für den Inhalt dieses Dokuments sind, berechnet werden. Beispielsweise kann ein Hashwert des Inhalts des digital codierten Dokuments berechnet werden. Diese Daten können mit der Blockchain-Struktur verglichen werden: Umfasst die Blockchain-Struktur die entsprechenden Daten, wird die Integrität des digitalen codierten Dokuments bestätigt und dieses als authentisch anerkannt. Umfasst die Blockchain-Struktur die entsprechenden Daten nicht, wird die Integrität des digital codierten Dokuments verneint. Die Blockchain-Struktur kann hierbei den Vorteil bieten, dass deren Größe kompakt gehalten werden kann, wenn diese nur Hashwerte der digital codierten Dokumente umfasst. Ferner können anhand der Hashwerte der digital codierten Dokumente keine Rückschlüsse auf die Inhalte der entsprechenden Dokumente gezogen werden, wodurch die Sicherheit erhöht wird.

Schließlich kann eine aktuelle Version der Blockchain-Struktur beispielsweise auf ein tragbares mobiles Telekommunikationsgerät über das Netzwerk heruntergeladen und zur Prüfung von digital codierten Dokumenten selbst dann genutzt werden, wenn keine Netzwerkverbindung zur Verfügung steht, d.h. sich das tragbare mobile Telekommunikationsgerät in einem Offline-Modus befindet.

Unter einem "Dokument" wird insbesondere eine Nachrichtenmeldung, ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw. Sachverhalt fixiert. Zudem kann die Urkunde den Austeller der Urkunde identifizieren.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei einem digital codierten Dokument kann es sich um beispielsweise um ein Dokument handeln, welche durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurden. Insbesondere ist die Gültigkeit eines solchen Dokuments unabhängig von dem Vorhandensein eines fest zugeordneten Dokumentenkörpers.

Nach Ausführungsformen kann ein digital codiertes Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokumentenkörpers, wie etwa einem Dokument auf Papier, erstellt werden.

Nach Ausführungsformen umfassen die zu speichernden Daten Daten einer Transaktion, wobei das Bereitstellen der zu speichernden Daten ein Empfangen der Daten mittels einer Kommunikationsschnittstelle über ein Netzwerk von einem an der Ausführung der Transaktion beteiligten Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten Transaktionen protokolliert werden können. Bei den Transaktionen kann es sich beispielsweise um Transaktionen einer Kryptowährung einer klassischen Währung, einen Verkauf, einen Versand, eine Eigentumsübertragung oder eine Übergabe eines Gegenstands und/oder eines digital codierten Dokuments handeln.

Nach Ausführungsformen umfassen die zu speichernden Daten Zustandsdaten einer Vorrichtung, wobei das Bereitstellen der zu speichernden Daten ein Empfangen der Daten mittels einer Kommunikationsschnittstelle über ein Netzwerk von einem die Zustandsdaten mittels eines Sensors erfassenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Zustandsdaten der Zustand und/oder die Zustandshistorie einer Vorrichtung protokolliert werden kann. Bei einer solchen Vorrichtung kann es sich beispielsweise um eine Produktionsvorrichtung, eine Komponente eines Computersystems, eine Schließanlage, eine Zugangskontrollvorrichtung oder ein Fahrzeug handeln. Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Die Zustandsdaten können nach Ausführungsformen auch Daten über von der Vorrichtung ausgeführte Funktionen umfassen. Beispielsweise können so von einer Produktionsvorrichtung ausgeführte Fertigungs- und/oder Bearbeitungsvorgänge protokolliert werden. Ferner können beispielsweise Aktionen einer Zugangskontrollvorrichtung protokolliert werde, wobei die protokollierten Daten Informationen darüber umfassen können, wann wer über die Zugangskontrollvorrichtung Zugang zu einem gesicherten Bereich erhalten hat.

Nach Ausführungsformen umfassen die zu speichernden Daten Daten, welche einen Bearbeitungsvorgang eines digital codierten Dokuments kennzeichnen, wobei das Bereitstellen der Blockchain-Struktur ein Empfangen des zu bearbeitenden Dokuments, welche die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst.

Ausführungsformen können den Vorteil haben, dass anhand der in der Blockchain-Struktur eingetragenen Daten Bearbeitungsvorgang eines digital codierten Dokuments protokolliert werden können. Beispielsweise kann protokolliert werden, wann wer auf das Dokument zugegriffen hat und ob bzw. welche Änderungen an dem Dokument vorgenommen wurden. Ferner können beispielsweise Kopiervorgänge des Dokuments protokolliert und die erweiterte Blockchain-Struktur zu der erstellten Kopie hinzugefügt werde. Die Blockchain-Struktur umfasst in diesem Fall eine Abstammungshistorie der erstellten Kopie.

Nach Ausführungsformen umfasst das Verfahren ferner:

- Empfangen einer Anfrage nach dem bearbeiteten Dokument mittels einer Kommunikationsschnittstelle über ein Netzwerk von einem anfragenden Computersystem,
- Versenden des bearbeiteten Dokuments mit der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der Blockchain-Struktur die Bearbeitungshistorie und/oder Abstammungshistorie des bearbeiteten Dokuments nachvollzogen und/oder nachgeprüft werden kann.

Bei dem Dokument kann es sich insbesondere um eine Nachrichtenmeldung handeln, etwa in Form einer Webseite, einer mit einer Webseite verlinkten oder in eine Webseite integrierten Datei oder eines Postings. Unter einer Webseite bzw. Webdokument, Internetseite oder Webpage wird ein über das Internet bereitgestelltes Dokument verstanden, das beispielsweis von einem Webserver angeboten und mit einem Browser eines Nutzer-Computersystems unter Angabe eines Uniform Resource Locators (URL) abgerufen werden kann. Beispielsweise handelt es sich um ein HTML-Dokument. Unter einem Posting wird hier ein einzelner Beitrag auf einer Internet-Plattform, wie etwa einer Social-Media-Plattform, in einem Webforum oder einem Blog verstanden.

Ausführungsformen umfassen ein elektronisches Datenspeichersystem zum manipulationssicheren Speichern von Daten in einer bidirektional verketteten Blockchain-Struktur. Das Datenspeichersystem umfasst einen Prozessor und einen elektronischen Speicher mit maschinenlesbaren Instruktionen, wobei ein Ausführen der maschinenlesbaren Instruktionen durch den Prozessor das Datenspeichersystem dazu veranlasst, ein Verfahren auszuführen, welches umfasst:

- Bereitstellen der bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen einer blockabhängigen Verkettungsfunktion zum bidirektionalen Verketten des letzten Blocks mit dem zusätzlichen Block, wobei das Berechnen der Verkettungsfunktion umfasst:

  ∘ Berechnen eines kombinierten blockabhängigen Prüfwerts des letzten und des zusätzlichen Blocks unter Verwendung der in dem letzten Block gespeicherten Daten und der in dem zusätzlichen Block zu speichernden Daten,
  ∘ Verknüpfen des kombinierten Prüfwerts mit einer blockunabhängigen verkettungsvorgangsindividuellen Funktion,

- Hinzufügen der blockabhängigen Verkettungsfunktion zu dem letzten Block,
- Hinzufügen der blockabhängigen Verkettungsfunktion zu dem zusätzlichen Block,
- Speichern der um den zusätzlichen Block erweiterten Blockchain-Struktur.

Nach Ausführungsformen ist das elektronisches Datenspeichersystem dazu konfiguriert eine oder mehrere der zuvor genannten Ausführungsformen des Verfahrens zum manipulationssicheren Speichern von Daten auszuführen.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen umfassen ein Telekommunikationssystem, welches das zuvor genannte elektronische Datenspeichersystem und eine Kommunikationsschnittstelle zum Kommunizieren über ein Netzwerk umfasst, wobei das Bereitstellen der zu speichernden Daten ein Empfangen der Daten mittels einer Kommunikationsschnittstelle über ein Netzwerk umfasst, wobei das ausgeführte Verfahren ferner umfasst:

- Empfangen einer Anfrage nach einer aktuellen Version der Blockchain-Struktur mittels der Kommunikationsschnittstelle über das Netzwerk von einem anfragenden Telekommunikationssystem,
- Versenden der erweiterten Blockchain-Struktur mittels der Kommunikationsschnittstelle über das Netzwerk an das anfragende Telekommunikationssystem in Antwort auf die empfangene Anfrage.

Bei dem Telekommunikationssystem handelt es sich beispielsweise um ein Computersystem, welches zur Kommunikation über ein Netzwerk konfiguriert ist.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem handeln, welcher eine Datenbank mit Daten verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Ausführungsformen umfassen ein Telekommunikationssystem, welches das zuvor genannte elektronische Datenspeichersystem und eine Kommunikationsschnittstelle zum Kommunizieren über ein Netzwerk umfasst, wobei die zu speichernden Daten Daten umfassen, welche einen Bearbeitungsvorgang eines digital codierten Dokuments kennzeichnen, wobei das Bereitstellen der Blockchain-Struktur ein Empfangen des zu bearbeitenden Dokuments, welche die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst, wobei das ausgeführte Verfahren ferner umfasst:

- Empfangen einer Anfrage nach dem bearbeiteten Dokument mittels der Kommunikationsschnittstelle über das Netzwerk von einem anfragenden Telekommunikationssystem,
- Versenden des bearbeiteten Dokuments mit der erweiterten Blockchain-Struktur mittels der Kommunikationsschnittstelle über das Netzwerk an das anfragende Telekommunikationssystem in Antwort auf die empfangene Anfrage.

Nach Ausführungsformen erfolgt das Versenden des digital codierten Dokuments auf einen Empfang einer Anforderung zum Versenden. Beispielsweise handelt es sich bei dem digital codierten Dokument um ein HTML-Dokument. Beispielsweise wird das digital codierten Dokument auf einer Internet-Plattform bereitgestellt, etwa als Webseite oder als Posting. Unter einem Posting wird hier ein einzelner Beitrag auf einer Internet-Plattform, wie etwa einer Social-Media-Plattform, in einem Webforum oder einem Blog verstanden. Ferner kann das digital codierten Dokument zum Download bereitgestellt sein. Beispielsweise umfasst eine Webseite oder ein Posting einen Link zum Aufrufen des digital codierten Dokuments.

Auf eine entsprechende Anforderung hin, etwa in Form einer HTTP-GET-Anforderung, wird das digital codierten Dokument an das anfordernde Computersystem versendet.

Nach alternativen Ausführungsformen erfolgt das Versenden des digital codierten Dokuments unabhängig von einer Anforderung zum Versenden. Beispielsweise wird das Dokument in Form einer E-Mail, einer Instant-Massage, einer Tonnachricht, einer Videonachricht, einer Bildnachricht, einer SMS oder einer MMS versendet bzw. von einem der zuvor genannten Nachrichtentypen umfasst. Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen. Die Teilnehmer dabei mit einem Computerprogramm über ein Netzwerk, wie etwa das Internet, direkt oder über einen Server miteinander verbunden sein.

Im Weiteren werden Ausführungsformen der Erfindung mit Bezugnahme auf die Zeichnungen näher erläutert. Es zeigen:

Figur 1     ein schematisches Blockdiagramm einer Ausführungsform einer exemplarischen Blockchain-Struktur,
Figur 2     ein schematisches Flussdiagramm eines exemplarischen Verfahrens zum Erstellen einer bidirektionalen Blockchain-Struktur,
Figur 3     ein schematisches Flussdiagramm eines exemplarischen Verfahrens zum Erstellen einer bidirektionalen Blockchain-Struktur,
Figur 4     ein schematisches Blockdiagramm eines exemplarischen Verfahrens zum Erstellen eines kombinierten blockabhängigen Prüfwerts,
Figur 5     ein schematisches Flussdiagramm eines exemplarischen Verfahrens zum Erstellen eines kombinierten blockabhängigen Prüfwerts,
Figur 6     ein schematisches Flussdiagramm eines exemplarischen Verfahrens zum Erstellen einer verkürzten bidirektionalen Blockchain-Struktur,
Figur 7     ein schematisches Blockdiagramm einer Ausführungsform eines exemplarischen Datenspeichersystems,
Figur 8     ein schematisches Blockdiagramm einer Ausführungsform eines exemplarischen Telekommunikationssystems.

Elemente der nachfolgenden Ausführungsformen, die einander entsprechen, werden mit denselben Bezugszeichen gekennzeichnet.

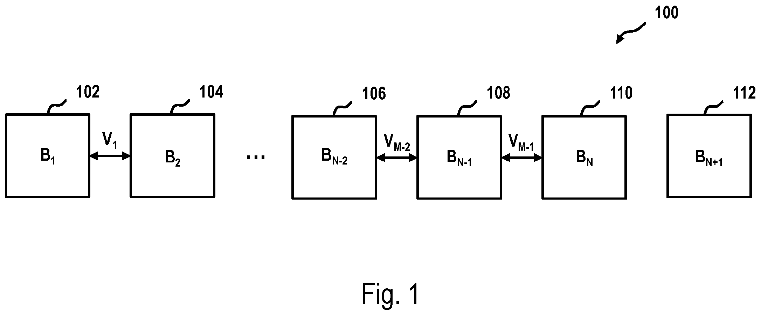

Figur 1 zeigt eine Ausführungsform einer exemplarischen Blockchain-Struktur 100, welche N-Blöcke 102, 104, 106, 108, 110 umfasst. Die Blockchain-Struktur 100 soll um einen zusätzlichen Block 112 erweitert werden. Die Blöcke 102, 104, 106, 108, 110 der Blockchain-Struktur 100 sind durch blockabhängige Verkettungsfunktionen bidirektional miteinander verkettet. Die einzelnen bidirektionalen Verbindungen bzw. Verkettungen $V_1$, $V_{M-2}$, $V_{M-1}$ sind schematisch angedeutet durch Doppelpfeile. Die inneren Blöcke 104, 106, 108 der Blockchain-Struktur 100 umfassen jeweils eine kombinierte blockabhängige Verkettungsfunktion, welche das Ergebnis einer Verknüpfung zweier blockabhängiger Verkettungsfunktionen ist. Eine erste der beiden verknüpften blockabhängigen Verkettungsfunktionen umfasst beispielsweise einen Prüfwert, welcher von den Daten des entsprechenden inneren Blocks sowie von den Daten des unmittelbar vorangehenden Blocks abhängig ist. Die zweite der beiden verknüpften Verkettungsfunktionen umfasst beispielsweise einen Prüfwert, welcher von den Daten des entsprechenden inneren Blocks und von den Daten des unmittelbar nachfolgenden Blocks abhängig ist. Die entsprechenden blockabhängigen Verkettungsfunktionen, d.h. die Verknüpfung der ersten und zweiten Verkettungsfunktionen, sind in die jeweiligen Blöcke integriert.

Der Prüfwert der Verkettungsfunktion zum Verketten des letzten Blocks 110 der Blockchain-Struktur 100 in dem zusätzlichen Block 112, d.h. zum Erzeugen der bidirektionalen Verbindung $V_M$, umfasst sowohl Daten, welche in dem letzten Block 110 gespeichert sind, als auch Daten, welche in dem zusätzlichen Block 112 zu speichern sind. Somit stellt die im Zuge der Verkettung in dem letzten Block 110 und dem zusätzlichen Block 112 gespeicherte Verkettungsfunktion nur solange den korrekten Prüfwert der beiden entsprechenden Blöcke dar, solange die Daten beider Blöcke unverändert bleiben. Im Falle einer Manipulation, beispielsweise des zusätzlichen Blocks 112, passt der Prüfwert des letzten Blocks 110 und damit die entsprechende Verkettungsfunktion der Verbindung zwischen dem letzten Block 110 und dem zusätzlichen Block 112 nicht mehr zu den Daten eines zusätzlichen Blocks 112. Anhand dieser Abweichung lässt sich eine entsprechende Manipulation erkennen. Ferner umfasst die Verkettungsfunktion zum Erzeugen der bidirektionalen Verbindung $V_M$ eine blockunabhängige verkettungsvorgangsindividuelle Funktion, welche beispielsweise von M abhängig ist.

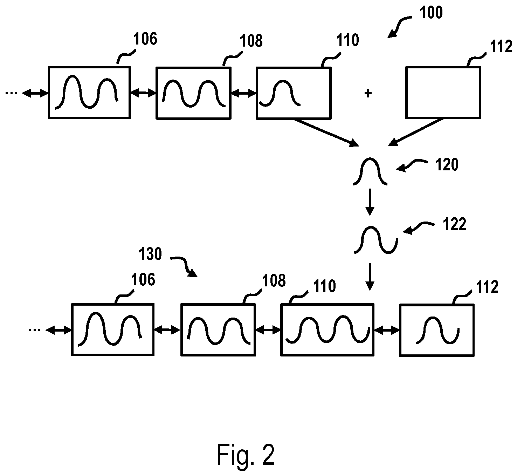

Figur 2 zeigt ein schematisches Blockdiagramm des Verfahrens zum Erweitern der Blockchain 100 aus Figur 1 um den Block 112. Die Blöcke 106, 108, 110 der Blockchain-Struktur 100 umfassen jeweils eine blockabhängige Verkettungsfunktion, welche schematisch durch Funktionskurven angedeutet sind. Die Blöcke in der Blockchain-Struktur 100, wie etwa der vorletzte Block 108 und der vorvorletzte Block 106, weisen jeweils eine blockabhängige bidirektionale Verkettungsfunktion auf, welche eine Verknüpfung der blockabhängigen bidirektionalen Verkettungsfunktionen der bidirektionalen Verbindungen zu dem vorhergehenden Block, beispielsweise Block 106 im Fall des Blocks 108, sowie zu dem nachfolgenden Block, beispielsweise Block 110 im Fall des Blocks 108. Die entsprechenden blockabhängigen Verkettungsfunktionen sind als mathematische Funktionen in die entsprechenden Blöcke 106, 108 integriert. Die jeweiligen blockabhängigen Verkettungsfunktionen wurden jeweils unter Verwendung der Daten beider miteinander zu verkettender Blöcke erzeugt. Ferner sind die entsprechenden Verkettungsfunktionen, durch die umfassten blockunabhängigen verkettungsvorgangsindividuellen Funktionen, jeweils verkettungsvorgangsabhängig. Damit sind die kombinierten Verkettungsfunktionen, welche eine Verknüpfung einer Mehrzahl von Verkettungsfunktionen darstellen, von einer Mehrzahl von Verkettungen bzw. bidirektionalen Verbindungen abhängig.

Zur bidirektionalen Verkettung des letzten Blocks 110 der Blockchain-Struktur 100 mit dem zusätzlichen Block 112 wird beispielsweise ein Funktional 112 bereitgestellt. Aus dem Funktional 112 wird eine konkrete blockunabhängige verkettungsvorgangsindividuelle Funktion abgeleitet. Diese Funktion wird mit einem Prüfwert der Daten der beiden miteinander zu verkettenden Blöcke, d.h. Block 110 und Block 112, verknüpft. Bei einer entsprechenden Verknüpfung kann es sich beispielsweise um eine arithmetische Verknüpfung, wie etwa eine Addition, Subtraktion, Multiplikation und/oder Division handeln. Somit kann aus der gemeinsamen übergreifenden Funktion 120 eine blockabhängige bidirektionale Verkettungsfunktion 122 abgeleitet werden, welche eindeutig der bidirektionalen Verbindung zwischen Block 110 und Block 112 zugeordnet ist und zudem sowohl von den Daten des Blocks 110 als auch von den Daten des Blocks 112 abhängt. Die blockabhängige bidirektionale Verkettungsfunktion 122 wird zur bidirektionalen Verkettung des Blocks 110 mit dem Block 112 sowohl zu dem Block 110 als auch zu dem Block 112 hinzugefügt. Dabei wird die Verkettungsfunktion 122 mit der in dem Block 110 bereits vorhandenen Verkettungsfunktion der bidirektionalen Verkettung zwischen Block 108 und Block 110 verknüpft.

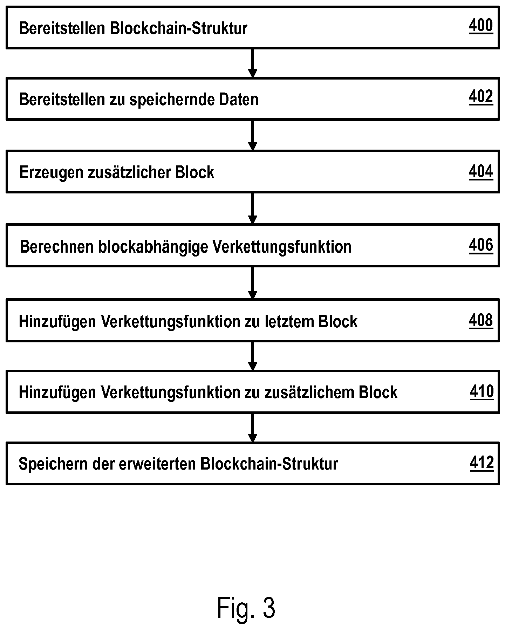

Figur 3 zeigt eine Ausführungsform eines exemplarischen Verfahrens zum Erweitern einer bidirektional verketteten Blockchain-Struktur um einen zusätzlichen Block. In Schritt 400 wird eine bidirektional verkettete Blockchain-Struktur bereitgestellt. In Schritt 402 werden die zu speichernden Daten bereitgestellt. In Block 404 wird ein zusätzlicher Block zum Erweitern der Blockchain-Struktur erzeugt. Der zusätzliche Block umfasst die zu speichernden Daten und ist dazu vorgesehen, mit dem letzten Block der Blockchain-Struktur bidirektional verkettet zu werden. In Schritt 406 wird eine blockabhängige Verkettungsfunktion zum bidirektionalen Verketten des letzten Blocks der Blockchain-Struktur mit dem zusätzlichen Block berechnet. Hierzu wird zum einen ein kombinierter blockabhängiger Prüfwert berechnet, welcher sowohl Daten des letzten Blocks der Blockchain-Struktur als auch Daten des hinzuzufügenden zusätzlichen Blocks umfasst. Insbesondere kann der Prüfwert die Verkettungsfunktion zum bidirektionalen Verketten des letzten Blocks der Blockchain-Struktur mit dem vorletzten Block der Blockchain-Struktur umfassen. Ferner wird eine blockunabhängige verkettungsvorgangsindividuelle Funktion bereitgestellt. Die blockunabhängige verkettungsvorgangsindividuelle Funktion kann beispielsweise aus einem Funktional abgeleitet sein. Dabei wird eine Funktion gewählt, welche eindeutig in den Verkettungsvorgang bzw. der bidirektionalen Verbindung zwischen dem letzten Block der Blockchain-Struktur und dem zusätzlichen Block zugeordnet ist. Eine entsprechende Zuordnung kann beispielsweise durch eine entsprechende Ordnungszahl der verkettungsvorgangsindividuellen Funktion implementiert sein. Die verkettungsvorgangsindividuelle Funktion wird mit dem Prüfwert verknüpft. Eine entsprechende Verknüpfung kann beispielsweise in Form einer arithmetischen Verknüpfung erfolgen. Beispielsweise kann die verkettungsvorgangsindividuelle Funktion mit dem Prüfwert multipliziert werden. In Schritt 408 wird die in Schritt 406 berechnete Verkettungsfunktion zu dem letzten Block der Blockchain-Struktur hinzugefügt. In Schritt 410 wird die verkettungsvorgangsindividuelle Funktion zu dem zusätzlichen Block hinzugefügt. Nach Ausführungsformen umfasst der Schritt 408 ein Verknüpfen der in Schritt 406 berechneten Verkettungsfunktion mit der in dem letzten Block bereits vorhandenen Verkettungsfunktion der bidirektionalen Verbindung zwischen dem letzten Block und dem vorletzten Block der Blockchain-Struktur. Bei der entsprechenden Verknüpfung kann es sich beispielsweise um eine arithmetische Verknüpfung handeln. Beispielsweise können die beiden Verkettungsfunktionen miteinander addiert werden.

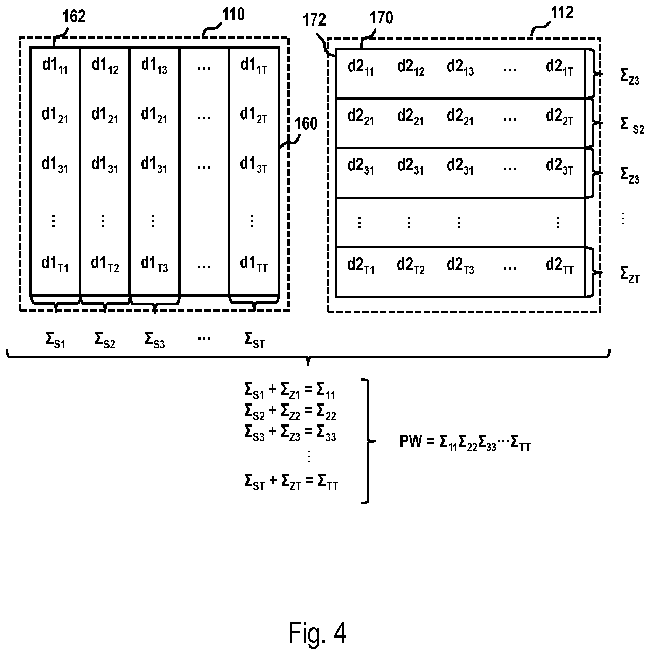

Figur 4 zeigt ein schematisches Blockdiagramm einer Berechnung des Prüfwerts zweier miteinander zu verkettender Blöcke 110, 112, wie sie etwa von Schritt 406 der Figur 3 umfasst wird. Die Daten der beiden miteinander zu verkettenden Blöcke 110, 112 sind beispielsweise jeweils in einer quadratischen (TxT)-Matrixstruktur 160, 170 gespeichert. Bei T handelt es sich beispielsweise um eine natürlich Zahl $T \geq 2$. Weisen die Matrixstrukturen 160, 170 der beiden Blöcke 110, 112 unterschiedliche Größen auf, so werden eine oder beide Matrixstrukturen 160, 170 derart erweitert, dass zwei gleich große quadratische Matrixstrukturen resultieren. Hierzu werden beispielsweise zusätzliche Matrixelemente bzw. zusätzliche Zeilen und/oder Spalten hinzugefügt. Die hinzugefügten Matrixelemente umfassen jeweils einen Platzhalter, beispielsweise den Wert 0. Weist beispielsweise die Matrixstruktur des Blocks 110 eine Spalte weniger auf, d.h. fehlt beispielsweise die T-te Spalte, so wird diese ergänzt, wobei alle Elemente der T-ten Spalte $D1_{1T}$ bis $D1_{TT}$ jeweils auf 0 gesetzt werden. Zum Berechnen des kombinierten blockabhängigen Prüfwerts PW wird beispielsweise für jede Spalte 162 der Matrixstruktur 160 des Blocks 110 die Summe aller Elemente der entsprechenden Spalte 162 berechnet. Für die i-te Spalte ergibt sich dabei die Summe $\sum_{Si} = \sum_{j=1}^{T} d1_{ji}.$ Zudem wird für jede der Zeilen 172 der Matrixstruktur 170 des Blocks 112 jeweils die Summe aller Elemente der entsprechenden Zeile 172 berechnet. Für die i-te Zeile ergibt sich dabei die Summe $\sum_{Zi} = \sum_{j=1}^{T} d2_{ij}.$ In einem nächsten Schritt wird jeweils die für die i-te Spalte der Matrixstruktur 160 des Blocks 110 berechnete Summe $\sum_{Si}$ zu der Summe $\sum_{Zi}$ der i-ten Zeile der Matrixstruktur 170 des Blocks 112 addiert. Die resultierenden T-Summen $\sum_{11}$ bis $\sum_{TT}$ werden als Zahlen aneinandergehängt, sodass eine Zahlenfolge resultiert, welche den kombinierten blockabhängigen Prüfwert bildet: PW = $\sum_{11}\sum_{22}\cdots\sum_{T-1T-1}\sum_{TT}$. Nach alternativen Ausführungsformen könnten zur Berechnung des kombinierten Prüfwerts auch die Summen über die Zeilen der Matrixstruktur 160 und die Summen über die Spalten der Matrixstruktur 170 gebildet werden.

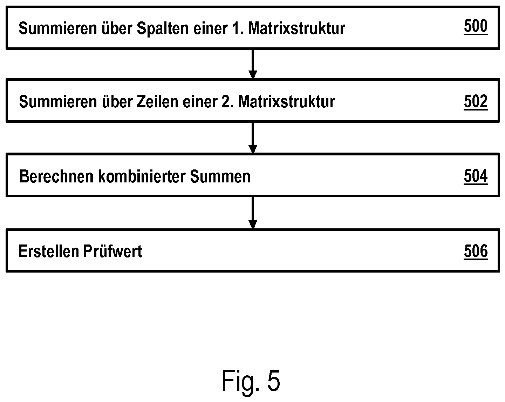

Figur 5 zeigt ein exemplarisches Verfahren zum Berechnen eines kombinierten blockabhängigen Prüfwerts gemäß Figur 4. In Schritt 500 wird für jede Spalte eine Matrixstruktur eines ersten Blocks eine Summe aus allen Elementen der entsprechenden Spalte berechnet. In Schritt 502 wird für jede Zeile einer Matrixstruktur eines zweiten Blocks, welche mit dem ersten Block bidirektional verkettet werden sollen, eine Summe aus allen Elementen der entsprechenden Zeile berechnet. In Schritt 504 wird jeder Spalte der Matrix des ersten Blocks eine Zeile der Matrix des zweiten Blocks zugeordnet. Beispielsweise wird die i-te Spalte der i-ten Zeile zugeordnet. Für jedes der resultierenden Paare aus der entsprechenden i-ten Spalte der Matrixstruktur des ersten Blocks und der i-ten Zeile der Matrixstruktur des zweiten Blocks wird eine kombinierte Summe berechnet. In Schritt 506 werden die in Schritt 504 berechneten Summen in einer Zahlenfolge aneinandergereiht, sodass sie einen kombinierten blockabhängigen Prüfwert bilden.

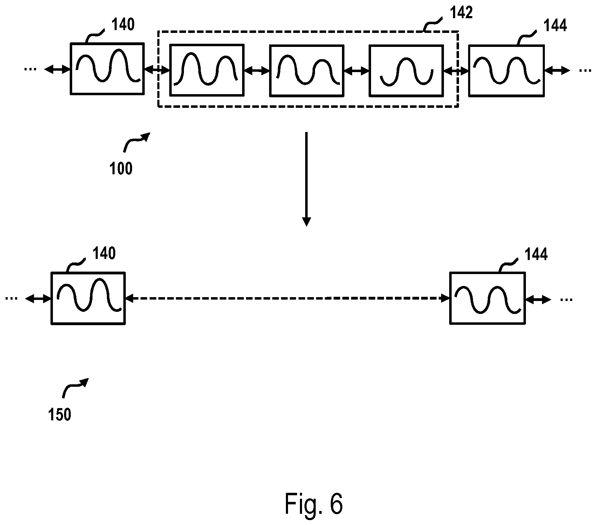

Figur 6 zeigt eine exemplarische bidirektional verkettete Blockchain-Struktur 100, welche verkürzt werden soll, sodass eine verkürzte Blockchain-Struktur 150 entsteht. Hierzu wird ein inneres Kettensegment 142 zwischen den Blöcken 140 und 144 entnommen. Das entnommene innere Kettensegment 142 kann beispielsweise sicherheitskritische Daten umfassen. Beispielsweise umfasst das innere Kettensegment 142 eine Mehrzahl von aufeinanderfolgenden Blöcken der Blockchain-Struktur 100. Nach der Entnahme des Kettensegments 142 bilden die Blöcke 140 und 144 benachbarte Blöcke. Diese benachbarten Blöcke 140 und 144 sind durch ihre Verkettungsfunktionen miteinander verbunden. Allerdings handelt es sich bei dieser Verbindung um eine Verbindung durch die blockunabhängigen verkettungsvorgangsindividuellen Funktionen, welche die Verkettungsfunktionen umfassen. Daher ist die bidirektionale Verbindung durch einen gestrichelten Doppelpfeil angezeigt. Die verkettungsvorgangsindividuellen Funktionen werden den einzelnen bidirektionalen Verbindungen bzw. Verkettungen gemäß einem vorgegebenen Zuordnungsschema zugeordnet. Beispielsweise entsprechend einer aufsteigenden Ordnung. Auf Basis dieser geordneten Zuordnung kann die Blockchain-Struktur weiterhin auf Konsistenz geprüft werden auf Basis der verkettungsvorgangsindividuellen Funktionen und deren gegenseitigen Abhängigkeiten, welche sich aus der Ableitung aus einem gemeinsamen Funktional ergibt. Im Falle der Figur 6 kann beispielsweise die verkettungsvorgangsindividuelle Funktion des Blocks 140 durch eine dreimalige Anwendung des Aufsteigeoperators in die verkettungsvorgangsindividuelle Funktion des Blocks 144 transformiert werden bzw. die verkettungsvorgangsindividuelle Funktion des Blocks 144 kann durch dreimaliges Anwenden des Absteigeoperators in die verkettungsvorgangsindividuelle Funktion des Blocks 140 transformiert werden.

Nach Ausführungsformen kann zusätzlich eine blockabhängige Verkettungsfunktion zum Erzeugen einer bidirektionalen Verkettung zwischen dem Block 140 und dem Block 144 erfolgen, welcher sowohl von den Daten des Blocks 140 als auch den Daten des Blocks 144 und allen Blöcken des Segments 142 abhängig ist. Hierzu werden die Verkettungsfunktionen der Blöcke des inneren Kettensegments 142 miteinander verknüpft, sodass eine kombinierte bidirektionale Verkettungsfunktion entsteht. Diese kombinierte bidirektionale Verkettungsfunktion ist abhängig von den Daten aller Blöcke des inneren Kettensegments 142 sowie der zu dem inneren Kettensegment 142 benachbarten Blöcke 140 und 144. Beispielsweise werden die einzelnen bidirektionalen Verkettungsfunktionen durch eine arithmetische Verknüpfung miteinander verknüpft, welche beispielsweise eine Addition, Subtraktion, Multiplikation und/oder Division umfassen. Die beiden Blöcke 140 und 144 der verkürzten Blockchain-Struktur 150, welche nach Entnahme des inneren Kettensegments 142 aus der Blockchain-Struktur 100 entstehen, werden unter Verwendung der kombinierten bidirektionalen Verkettungsfunktion miteinander verkettet. Dadurch werden die beiden Blöcke 140 und 144, welche nach der Entnahme des inneren Kettensegments 142 lose Enden der Blockchain-Struktur 150 bilden, nicht nur im Hinblick auf die verkettungsvorgangsindividuellen Funktionen bidirektional miteinander verbunden, sondern auch im Hinblick auf ihre Daten. Hierzu werden beispielsweise die Verkettungsfunktionen der Blöcke 140, 144 derart erweitert, dass sie die kombinierte bidirektionale Verkettungsfunktion vollständig umfassen. Damit entsteht eine verkürzte bidirektional verkettete Blockchain-Struktur 150, bei welcher alle Blöcke nicht nur im Hinblick auf die Reihenfolge ihrer Verknüpfungen, sondern auch im Hinblick auf ihre Daten bidirektional miteinander verkettet sind. Die entstehende Blockchain-Struktur 150 ist dabei insbesondere nach wie vor abhängig von dem entnommenen inneren Kettensegment 142. Wird das entnommene innere Kettensegment 142 zur Ergänzung der verkürzten Blockchain-Struktur 150 bereitgestellt, so kann durch Verwendung der erweiterten bidirektionalen Verkettungsfunktionen der Blöcke 140, 144 geprüft werden, ob das bereitgestellte innere Kettensegment authentisch ist. Ist das bereitgestellte innere Kettensegment authentisch, d.h. identisch mit dem entnommenen Kettensegment 142, so kann die verkürzte Blockchain-Struktur zu der ursprünglichen vollständigen Blockchain-Struktur 100 ergänzt werden. Somit können beispielsweise Blöcke mit sicherheitskritischen Daten ergänzt werden, welche zuvor zum Schutz der sicherheitskritischen Daten entnommen wurden.

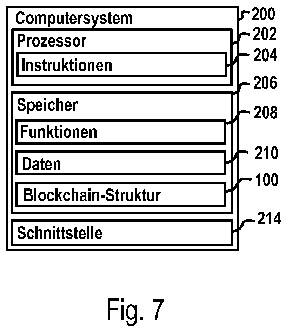

Figur 7 zeigt ein schematisches Blockdiagramm einer Ausführungsform eines exemplarischen Datenspeichersystems 200 in Form eines Computersystems zum manipulationssicheren Speichern von Daten 210 in einem elektronischen Speicher 206 unter Verwendung einer bidirektional verketteten Blockchain-Struktur 100. Das Computersystem 200 umfasst einen Prozessor 202, welcher dazu konfiguriert ist, Programminstruktionen 204 auszuführen. Durch Ausführung der Programminstruktionen 204 steuert der Prozessor 202 das Computersystem 200 so, dass es eine der zuvor beschriebenen Ausführungsformen des Verfahrens zum manipulationssicheren Speichern von Daten ausführt.

Das Computersystem 200 umfasst ferner einen Speicher 206, in welchem Funktionen 208 zum Berechnen bidirektionaler Verkettungsfunktionen, d.h. zum Berechnen bzw. Ableiten von blockabhängigen kombinierten Prüfwerten und von blockunabhängigen verkettungsvorgangsindividuellen Funktionen, sowie die bidirektional verkettete Blockchain-Struktur 100 gespeichert sind. Der Speicher 206 umfasst zudem Daten 210, welche unter Verwendung einer bidirektional verketteten Blockchain-Struktur 100 gegen Manipulationen geschützt bzw. manipulationssicher gespeichert werden sollen. Beispielsweise führt das Computersystem 200 eines der Verfahren gemäß Figuren 2 und 3 aus und erzeugt einen zusätzlichen Block für die Blockchain-Struktur 100, welcher die zu manipulationssicher speichernden Daten 210 umfasst und bidirektional mit dem letzten Block der Blockchain-Struktur 100 verknüpft wird. Für die bidirektionale Verknüpfung des zusätzlichen Blocks wird beispielsweise ein kombinierter Prüfwert unter Verwendung der Funktionen 208 berechnet, welche die Daten 210 sowie Daten aus der Blockchain-Struktur 100 umfassen, und mit einer verkettungsvorgangsindividuellen Funktion verknüpft.

Schließlich umfasst das Computersystem 200 eine Kommunikationsschnittstelle 214. Bei dieser Kommunikationsschnittstelle 214 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 214 können beispielsweise die Daten 210 und/oder die Blockchain-Struktur 100 bereitgestellt werden. Ferner kann es sich bei der Kommunikationsschnittstelle 214 um eine Nutzerschnittstelle zur Eingabe von Befehlen durch einen Nutzer und/oder zur Ausgabe von Ergebnissen handeln.

Nach Ausführungsformen können die Programminstruktionen 204 beispielsweise ein Datenbankmanagementsystem umfassen, welches in dem Speicher 206 gespeicherte Blockchain-Strukturen, wie etwa Blockchain-Struktur 100, verwaltet.

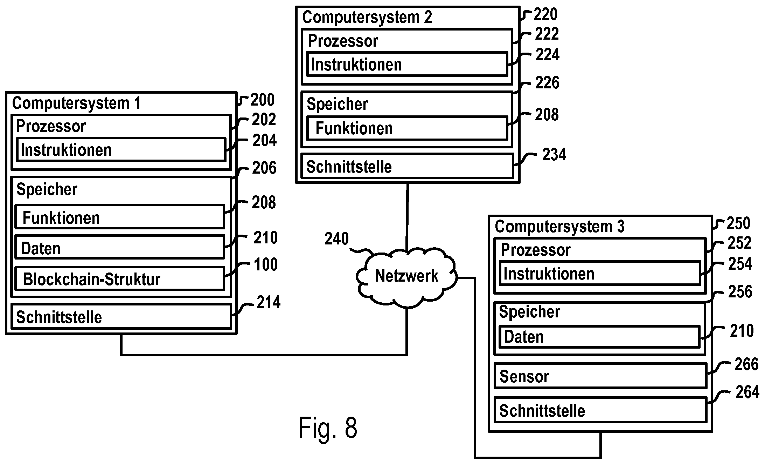

Figur 8 das exemplarische Datenspeichersystems 200 aus Figur 7, welches als ein Telekommunikationssystem konfiguriert ist, das mittels der Kommunikationsschnittstelle 214 über das Netzwerk 240 mit anderen Computersystemen, wie etwa den Computersystemen 220, 250, kommunizieren kann. Beispielsweise werden die Daten 210 von dem Computersystem 250 über das Netzwerk 240 bereitgestellt.

Das Computersystem 250 umfasst beispielsweise einen Speicher 256 zum Speichern der Daten 210, welche durch das Computersystem 200 gegen Manipulationen gesichert werden sollen. Nach Ausführungsformen handelt es sich bei den Daten 210 um Daten, welche kennzeichnend für ein digital codiertes Dokument sind. Beispielsweise handelt es sich bei den Daten 210 um einen Hashwert des Inhalts eines digital codierten Dokuments. Nach weiteren Ausführungsformen handelt es sich bei den Daten 210 um Transaktionsdaten einer von dem Computersystem 250 veranlassten, protokollierten und/oder ausgeführten Transaktion. Nach weiteren Ausführungsformen handelt es bei den Daten 210 um Sensordaten, welche mittels eines Sensors 266 des Computersystems 250 erfasst wurden. Ferner umfasst das Computersystem 250 einen Prozessor 252, welcher dazu konfiguriert ist, Programminstruktionen 254 auszuführen. Nach Ausführungsformen ist das Computersystems 250 ebenfalls als ein Telekommunikationssystem konfiguriert sein, welches mittels der Kommunikationsschnittstelle 264 über das Netzwerk 240 mit dem Computersystemen 200 kommunizieren kann. Ein Ausführen der Programminstruktionen 254 durch den Prozessor 252 veranlasst das Computersystems 250 beispielsweise die Daten 210 an das Computersystem 200 zu senden. Das Übersenden der Daten 210 über das Netzwerk 240 kann dabei beispielsweise in Antwort auf eine Anfrage durch das Computersystem 200 oder auf eigene Initiative durch das Computersystem 250 veranlasst erfolgen.

Die Figur 8 zeigt zudem das Computersystem 220, welche beispielsweise ebenfalls als ein Telekommunikationssystem konfiguriert ist und mittels der Kommunikationsschnittstelle 264 über das Netzwerk 240 mit dem Computersystemen 200 kommunizieren kann. Das Computersystem 220 umfasst beispielsweise einen Prozessor 222 mit Programminstruktionen 224. Der Prozessor 222 ist dazu konfiguriert die Programminstruktionen 224 auszuführen, wobei ein Ausführen der Programminstruktionen 224 durch den Prozessor 222 das Computersystems 220 dazu veranlasst die um die Daten 210 erweiterte Blockchain-Struktur 100 über das Netzwerk von dem Computersystem 200 anzufragen. In Antwort auf eine entsprechende Anfrage empfängt das Computersystems 220 beispielsweise die Blockchain-Struktur 100. Nach Ausführungsformen kann das Computersystems 220 die Blockchain-Struktur 100 in der Blockchain-Struktur 100 gespeicherte Daten auslesen. Die Integrität der ausgelesenen Daten kann das Computersystems 220 beispielsweise unter Verwendung der in dem Speicher 226 gespeicherten Funktionen 208 prüfen. Mit den Funktionen 208 können die blockabhängigen bidirektionalen Verkettungsfunktionen der Blockchain-Struktur 100, welche die Blöcke der Blockchain-Struktur 100 bidirektional miteinander verketten, nachgerechnet und auf Konsistenz bzw. Integrität geprüft werden. Bei den ausgelesenen Daten handelt es sich beispielsweise um Daten zum Belegen der Authentizität eines digital codierten Dokuments. Das entsprechende Dokument wird dem Computersystem 220 beispielsweise von dem Computersystem 250 über das Netzwerk 240 zur Verfügung gestellt. Handelt es sich bei den ausgelesenen Daten beispielsweise um einen Hashwert des Inhalts des Dokuments, so kann anhand dieser Daten die Authentizität des bereitgestellten Dokuments geprüft werden. Beispielswiese wird für das Dokument ein Hashwert durch das Computersystem 220 berechnet. Stimmt der berechnete Hashwert mit den ausgelesenen Daten überein, wird das bereitgestellte Dokument als authentisch anerkannt.

Die durch das Computersystem 220 empfangene Blockchain-Struktur 100 kann insbesondere auch für Prüfungen im Offline-Modus genutzt werden, d.h. wenn das Netzwerk 240 temporär nicht zur Verfügung steht. So können Daten, welche mithilfe der Blockchain-Struktur 100 auf ihre Authentizität zu überprüfen sind, beispielsweise durch das Computersystem 220 direkt empfangen oder eingelesen werden, ohne Netzwerk 240. Diese Daten können dann unter Verwendung der Blockchain-Struktur 100 auf ihre Authentizität überprüft werden.

Bezugszeichenliste

| | |
|---|---|
| 100 | Blockchain-Struktur |
| 102 | erste Block |
| 104 | zweiter Block |
| 106 | vorvorletzter Block |
| 108 | vorletzter Block |
| 110 | letzter Block |
| 112 | zusätzlicher Block |
| 120 | gemeinsame übergreifende Funktion |
| 122 | bidirektionale Verkettungsfunktion |
| 130 | erweiterte Blockchain-Struktur |
| 140 | Block |
| 142 | inneres Kettensegment |
| 144 | Block |
| 150 | verkürzte Blockchain-Struktur |
| 160 | Matrixstruktur |
| 162 | Spalte |
| 170 | Matrixstruktur |
| 172 | Zeile |
| 200 | Computersystem |
| 202 | Prozessor |
| 204 | Programminstruktionen |
| 206 | Speicher |
| 208 | Funktionen |
| 210 | Daten |
| 214 | Kommunikationsschnittstelle |

220 Computersystem
222 Prozessor
224 Programminstruktionen
226 Speicher
234 Kommunikationsschnittstelle
240 Netzwerk
250 Computersystem
252 Prozessor
254 Programminstruktionen
256 Speicher
264 Kommunikationsschnittstelle
266 Sensor

**Patentansprüche**

1. Verfahren zum manipulationssicheren Speichern von Daten in einem elektronischen Speicher unter Verwendung einer bidirektional verketteten Blockchain-Struktur (100), wobei das Verfahren umfasst:

   • Bereitstellen der bidirektional verketteten Blockchain-Struktur (100),
   • Bereitstellen der zu speichernden Daten (210),
   • Erzeugen eines zusätzlichen Blocks (112) zum Erweitern der Blockchain-Struktur (100), welcher die zu speichernden Daten (210) umfasst und dazu vorgesehen ist mit dem letzten Block (110) der Blockchain-Struktur (100) bidirektional verkettet zu werden, wobei der letzte Block (110) der Blockchain-Struktur (100) gespeicherte Daten umfasst,
   • Berechnen einer ersten blockabhängigen Verkettungsfunktion (122) zum bidirektionalen Verketten des letzten Blocks (110) mit dem zusätzlichen Block (112), wobei das Berechnen der Verkettungsfunktion (122) umfasst:

      ◦ Berechnen eines kombinierten blockabhängigen Prüfwerts des letzten und des zusätzlichen Blocks (110, 112) unter Verwendung der in dem letzten Block (110) gespeicherten Daten und der in dem zusätzlichen Block (112) zu speichernden Daten (210),
      ◦ Verknüpfen des kombinierten Prüfwerts mit einer blockunabhängigen verkettungsvorgangsindividuellen Funktion,

   • Hinzufügen der ersten blockabhängigen Verkettungsfunktion (122) zu dem letzten Block (110),
   • Hinzufügen der ersten blockabhängigen Verkettungsfunktion (122) zu dem zusätzlichen Block (112),
   • Speichern der um den zusätzlichen Block (112) erweiterten Blockchain-Struktur (130).

2. Verfahren nach Anspruch 1, wobei der letzte Block (110) der Blockchain-Struktur (100) ferner eine zweite blockabhängige Verkettungsfunktion der bidirektionalen Verkettung des letzten Blocks (110) mit einem vorletzten Block (108) der Blockchain-Struktur (100) umfasst,
   wobei das Hinzufügen der ersten blockabhängigen Verkettungsfunktion (122) zu dem letzten Block (110) ein Verknüpfen der ersten blockabhängigen Verkettungsfunktion (122) mit der zweiten blockabhängigen Verkettungsfunktion umfasst.

3. Verfahren nach einem der vorangehenden Ansprüche, wobei die blockunabhängige verkettungsvorgangsindividuelle Funktion eine Funktion einer Funktionenschar ist, welche einen Mehrzahl von blockunabhängigen verkettungsvorgangsindividuellen Funktionen umfasst, wobei jeder Funktion der Funktionenschar jeweils eine Ordnungszahl zugeordnet ist und die Funktionen der Funktionenschar beginnenden mit einer ersten Ordnungszahl, welche einer ersten bidirektionalen Verkettung der bidirektional verketteten Blockchain-Struktur (100) zwischen einem ersten und einem zweiten Block der Kettenstruktur zugeordnet ist, gemäß einer vordefinierten Zuordnungsvorschrift dazu vorgesehen sind, in aufsteigender Ordnung jeweils individuell einer bidirektionalen Verkettung zweier Blöcke der bidirektional verketteten Blockchain-Struktur (100) zugeordnet und zum Berechnen einer von den entsprechenden zwei Blöcken abhängigen Verkettungsfunktion (122) verwendet zu werden.

4. Verfahren nach Anspruch 3, wobei die blockunabhängige verkettungsvorgangsindividuelle Funktion ein Polynom M-ter Ordnung umfasst, wobei M eine natürliche Zahl ist,
   wobei die blockunabhängige verkettungsvorgangsindividuelle Funktion insbesondere eine Verknüpfung des Polynoms M-ter Ordnung mit einer Exponentialfunktion umfasst, wobei der Exponent der Exponentialfunktion ein Polynom der Ordnung größer-gleich zwei umfasst.

5. Verfahren nach einem der vorangehenden Ansprüche, wobei das Berechnen des kombinierten blockabhängigen Prüfwerts des letzten und des zusätzlichen Blocks (110, 112) ein Anwenden einer Hashfunktion auf die in dem letzten Block (110) gespeicherten Daten und die in dem zusätzlichen Block (112) zu speichernden Daten (210) umfasst.

6. Verfahren nach einem der Ansprüche 1 bis 4, wobei die Daten in den Blöcken der Blockchain-Struktur (100) jeweils in einer quadratische (TxT)-Matrixstruktur (160, 170) gespeichert sind, wobei T eine natürliche Zahl größer-gleich zwei ist, wobei das Berechnen des kombinierten blockabhängigen Prüfwerts des letzten und des zusätzlichen Blocks (110, 112) umfasst:

○ Berechnen einer Summe über jede Spalte (162) einer ersten Matrixstruktur (160), welche von den beiden Matrixstrukturen (160, 170) der in dem letzten Block (110) gespeicherten Daten und der in dem zusätzlichen Block (112) zu speichernden Daten (210) bereitgestellt wird,
○ Berechnen einer Summe über jede Zeile (172) einer zweiten Matrixstruktur (170), welche von den beiden Matrixstrukturen (160, 170) der in dem letzten Block (110) gespeicherten Daten und der in dem zusätzlichen Block (112) zu speichernden Daten (210) bereitgestellt wird,
○ Berechnen der kombinierten Summe aus der Summe der i-ten Spalte und der Summe der i-ten Zeile, wobei i eine natürliche Zahl ist und von 1 bis T läuft,
○ Bilden des kombinierten blockabhängigen Prüfwerts durch Verknüpfen der kombinierten Summen miteinander, wobei ein Verknüpfen der kombinierten Summen miteinander insbesondere ein Aneinanderreihen der kombinierten Summen umfasst.

7. Verfahren nach einem der vorangehenden Ansprüche, wobei aufeinanderfolgende Blöcke der bidirektional verketteten Blockchain-Struktur (100) jeweils bidirektional miteinander verkettet sind, wobei zwei bidirektional miteinander verkettete Blöcke jeweils beide eine gemeinsame blockabhängige Verkettungsfunktion (122) umfassen, wobei die gemeinsame blockabhängige Verkettungsfunktion (122) jeweils einen kombinierten blockabhängigen Prüfwert der in den beiden aufeinanderfolgenden Blöcke gespeicherten Daten umfasst.

8. Verfahren nach einem der vorangehenden Ansprüche, wobei die Blockchain-Struktur (100) durch eine verkürzte Blockchain-Struktur (150) ersetzt wird, wobei die verkürzte Blockchain-Struktur (150) um zumindest ein inneres Kettensegment (142) der Blockchain-Struktur (100) verkürzt ist, wobei das innere Kettensegment (142) zumindest einen Block umfasst.

9. Verfahren nach Anspruch 8, wobei das Verfahren ferner umfasst:

• Bereitstellen von blockunabhängigen Transformationsfunktionen, welche dazu konfiguriert sind, die blockunabhängigen verkettungsvorgangsindividuellen Funktionen der blockabhängigen Verkettungsfunktionen (122) ineinander zu transformieren,
• Prüfen der verkürzte Blockchain-Struktur (150) auf Konsistenz, wobei die blockunabhängigen verkettungsvorgangsindividuellen Funktionen der blockabhängigen Verkettungsfunktionen (122) zweier direkter Nachbarblöcke der verkürzten Blockchain-Struktur (150), zwischen denen das innere Kettensegment (142) entnommen wurde, unter Verwendung der Transformationsfunktionen ineinander transformiert und die Transformationsergebnisse auf Konsistenz geprüft werden,
wobei die blockunabhängigen Transformationsfunktionen insbesondere dazu konfiguriert sind, die blockunabhängigen verkettungsvorgangsindividuellen Funktionen der blockabhängigen Verkettungsfunktionen (122) jeweils als Aufsteigeoperatoren in eine nächsthöhere blockunabhängigen verkettungsvorgangsindividuelle Funktion gemäß der aufsteigenden Ordnung zu transformieren und/oder als Absteigeoperatoren die blockunabhängigen verkettungsvorgangsindividuellen Funktionen der blockabhängigen Verkettungsfunktionen jeweils in eine nächsttiefere blockunabhängigen verkettungsvorgangsindividuelle Funktion gemäß der aufsteigenden Ordnung zu transformieren.

10. Verfahren nach einem der vorangehenden Ansprüche, wobei die blockabhängige Verkettungsfunktion (122) $k_M(x)$ die folgende Form aufweist:

$$k_M(x) = g(D_N, D_{N+1})\, f_M(x)$$

wobei $g(D_N, D_{N+1})$ den kombinierten blockabhängigen Prüfwert des N-ten und (N+1)-ten Block der Blockchain-Struktur (100), $D_N$ die in dem N-ten Block gespeicherten Daten und $D_{N+1}$ die in dem (N+1)-ten Block zu speichernden Daten (210) bezeichnet,

wobei die blockunabhängige verkettungsvorgangsindividuelle Funktion $f_M(x)$ folgende Form aufweist:

$$f_M(x) = c\, H_M(\sqrt{b}\,x)\, e^{-\frac{1}{2}b\,x^2},$$

wobei M eine natürliche Zahl bezeichnet, welche eindeutig dem individuellen Verkettungsvorgang zugeordnet ist, wobei b und c jeweils einen festgelegten Parameter und x eine Variable bezeichnet und wobei $H_M(\sqrt{b}\,x)$ ein Hermitesches Polynom mit folgender Form bezeichnet:

$$H_M(\sqrt{b}\,x) = (-1)^M e^{b\,x^2} \frac{d^M}{d(\sqrt{b}\,x)^M}\left(e^{-b\,x^2}\right).$$

11. Verfahren nach Anspruch 10, wobei die Transformationsfunktionen einen Aufsteigeoperator der Form:

$$\hat{a}^\dagger = \sqrt{\frac{b}{2}}\left(x - b^{-1}\frac{d}{dx}\right)$$

und einen Absteigeoperator der Form:

$$\hat{a} = \sqrt{\frac{b}{2}}\left(x + b^{-1}\frac{d}{dx}\right)$$

umfassen und Konsistenz zwischen dem N-ten und dem (N+L)-ten Block, zwischen denen ein inneres Kettensegment (142) mit den Blöcken N+1 bis N+L-1 entnommen wurde, gegeben ist, falls

$$\frac{\left(\hat{a}^\dagger\right)^{L-1} k_M(x)}{k_{M+L-1}(x)} = \frac{c\, k_M(x)}{(\hat{a})^{L-1} k_{M+L-1}(x)}$$

gilt, wobei c eine Konstante ist.

12. Verfahren nach einem der vorangehenden Ansprüche, wobei die zu speichernden Daten (210) Daten umfassen, welche kennzeichnend für den Inhalt eines digital codierten Dokuments sind, wobei das Bereitstellen der zu speichernden Daten (210) ein Empfangen der Daten mittels einer Kommunikationsschnittstelle (214) über ein Netzwerk (240) von einem das digital codierte Dokument erstellenden Computersystem (250) umfasst, wobei das Verfahren ferner umfasst:

    • Empfangen einer Anfrage nach einer aktuellen Version der Blockchain-Struktur (100) mittels der Kommunikationsschnittstelle (214) über das Netzwerk (240) von einem anfragenden Computersystem (220),
    • Versenden der erweiterten Blockchain-Struktur (130) mittels der Kommunikationsschnittstelle (214) über das Netzwerk (240) an das anfragende Computersystem (220) in Antwort auf die empfangene Anfrage, oder

wobei die zu speichernden Daten (210) Daten einer Transaktion umfassen, wobei das Bereitstellen der zu speichernden Daten (210) ein Empfangen der Daten mittels einer Kommunikationsschnittstelle (214) über ein Netzwerk (240) von einem an der Ausführung der Transaktion beteiligten Computersystem (250) umfasst, wobei das Verfahren ferner umfasst:

- Empfangen einer Anfrage nach einer aktuellen Version der Blockchain-Struktur (100) mittels der Kommunikationsschnittstelle (214) über das Netzwerk (240) von einem anfragenden Computersystem (220),
- Versenden der erweiterten Blockchain-Struktur (130) mittels der Kommunikationsschnittstelle (214) über das Netzwerk (240) an das anfragende Computersystem (220) in Antwort auf die empfangene Anfrage, oder

wobei die zu speichernden Daten (210) Zustandsdaten einer Vorrichtung umfassen, wobei das Bereitstellen der zu speichernden Daten (210) ein Empfangen der Daten mittels einer Kommunikationsschnittstelle (214) über ein Netzwerk (240) von einem die Zustandsdaten mittels eines Sensors erfassenden Computersystem (250) umfasst, wobei das Verfahren ferner umfasst:

- Empfangen einer Anfrage nach einer aktuellen Version der Blockchain-Struktur (100) mittels der Kommunikationsschnittstelle (214) über das Netzwerk (240) von einem anfragenden Computersystem (250),
- Versenden der erweiterten Blockchain-Struktur (130) mittels der Kommunikationsschnittstelle (214) über das Netzwerk (240) an das anfragende Computersystem (250) in Antwort auf die empfangene Anfrage, oder

wobei die zu speichernden Daten (210) Daten umfassen, welche einen Bearbeitungsvorgang eines digital codierten Dokuments kennzeichnen, wobei das Bereitstellen der Blockchain-Struktur (100) ein Empfangen des zu bearbeitenden Dokuments, welche die Blockchain-Struktur (100) umfasst, und ein Auslesen der Blockchain-Struktur (100) aus dem empfangenen Dokument umfasst, wobei das Bereitstellen der zu speichernden Daten (210) ein Bearbeiten des empfangenen Dokuments und ein Erzeugen der Daten umfasst, wobei das Speichern der erweiterten Blockchain-Struktur (130) ein Hinzufügen der erweiterten Blockchain-Struktur (130) zu dem bearbeiteten Dokument und ein Speichern des bearbeiteten Dokuments mit der erweiterten Blockchain-Struktur (130) umfasst, wobei das Verfahren ferner insbesondere umfasst:

- Empfangen einer Anfrage nach dem bearbeiteten Dokument mittels einer Kommunikationsschnittstelle (214) über ein Netzwerk (240) von einem anfragenden Computersystem (220),
- Versenden des bearbeiteten Dokuments mit der erweiterten Blockchain-Struktur (130) mittels der Kommunikationsschnittstelle (214) über das Netzwerk (240) an das anfragende Computersystem (220) in Antwort auf die empfangene Anfrage.

13. Elektronisches Datenspeichersystem (200) zum manipulationssicheren Speichern von Daten (210) in einer bidirektional verketteten Blockchain-Struktur (100), wobei das Datenspeichersystem einen Prozessor (202) und einen elektronischen Speicher (206) mit maschinenlesbaren Instruktionen (204) umfasst, wobei ein Ausführen der maschinenlesbaren Instruktionen (204) durch den Prozessor (202) das Datenspeichersystem (200) dazu veranlasst, ein Verfahren auszuführen, welches umfasst:

- Bereitstellen der bidirektional verketteten Blockchain-Struktur (100),
- Bereitstellen der zu speichernden Daten (210),
- Erzeugen eines zusätzlichen Blocks (112) zum Erweitern der Blockchain-Struktur (100), welcher die zu speichernden Daten (210) umfasst und dazu vorgesehen ist mit dem letzten Block (110) der Blockchain-Struktur (100) bidirektional verkettet zu werden, wobei der letzte Block (110) der Blockchain-Struktur (100) gespeicherte Daten umfasst,
- Berechnen einer blockabhängigen Verkettungsfunktion (122) zum bidirektionalen Verketten des letzten Blocks (110) mit dem zusätzlichen Block (112), wobei das Berechnen der Verkettungsfunktion (122) umfasst:

    ◦ Berechnen eines kombinierten blockabhängigen Prüfwerts des letzten und des zusätzlichen Blocks (110, 112) unter Verwendung der in dem letzten Block (110) gespeicherten Daten und der in dem zusätzlichen Block (112) zu speichernden Daten (210),
    ◦ Verknüpfen des kombinierten Prüfwerts mit einer blockunabhängigen verkettungsvorgangsindividuellen Funktion,

- Hinzufügen der blockabhängigen Verkettungsfunktion (122) zu dem letzten Block (110),
- Hinzufügen der blockabhängigen Verkettungsfunktion (122) zu dem zusätzlichen Block (112),

• Speichern der um den zusätzlichen Block (112) erweiterten Blockchain-Struktur (130).

14. Telekommunikationssystem, welches ein elektronisches Datenspeichersystem (200) nach Anspruch 13 und eine Kommunikationsschnittstelle (214) zum Kommunizieren über ein Netzwerk (240) umfasst, wobei das Bereitstellen der zu speichernden Daten (210) ein Empfangen der Daten mittels einer Kommunikationsschnittstelle (214) über ein Netzwerk (240) umfasst, wobei das ausgeführte Verfahren ferner umfasst:

• Empfangen einer Anfrage nach einer aktuellen Version der Blockchain-Struktur (100) mittels der Kommunikationsschnittstelle (214) über das Netzwerk (240) von einem anfragenden Telekommunikationssystem (220),
• Versenden der erweiterten Blockchain-Struktur (130) mittels der Kommunikationsschnittstelle (214) über das Netzwerk (240) an das anfragende Telekommunikationssystem (220) in Antwort auf die empfangene Anfrage.

15. Telekommunikationssystem, welches ein elektronisches Datenspeichersystem (200) nach Anspruch 13 und eine Kommunikationsschnittstelle (214) zum Kommunizieren über ein Netzwerk (240) umfasst, wobei die zu speichernden Daten (210) Daten umfassen, welche einen Bearbeitungsvorgang eines digital codierten Dokuments kennzeichnen, wobei das Bereitstellen der Blockchain-Struktur (100) ein Empfangen des zu bearbeitenden Dokuments, welche die Blockchain-Struktur (100) umfasst, und ein Auslesen der Blockchain-Struktur (100) aus dem empfangenen Dokument umfasst, wobei das Bereitstellen der zu speichernden Daten (210) ein Bearbeiten des empfangenen Dokuments und ein Erzeugen der Daten umfasst, wobei das Speichern der erweiterten Blockchain-Struktur (130) ein Hinzufügen der erweiterten Blockchain-Struktur (130) zu dem bearbeiteten Dokument und ein Speichern des bearbeiteten Dokuments mit der erweiterten Blockchain-Struktur (130) umfasst, wobei das ausgeführte Verfahren ferner umfasst:

• Empfangen einer Anfrage nach dem bearbeiteten Dokument mittels der Kommunikationsschnittstelle (214) über das Netzwerk (240) von einem anfragenden Telekommunikationssystem (220),
• Versenden des bearbeiteten Dokuments mit der erweiterten Blockchain-Struktur (130) mittels der Kommunikationsschnittstelle (214) über das Netzwerk (240) an das anfragende Telekommunikationssystem (220) in Antwort auf die empfangene Anfrage.

Claims

1. A method for storing data in a tamper-proof manner in an electronic storage device, using a bidirectionally linked blockchain structure (100), the method comprising:

• providing the bidirectionally linked blockchain structure (100);
• providing the data (210) to be stored;
• generating an additional block (112) for expanding the blockchain structure (100), which includes the data (210) to be stored and is intended to be linked bidirectionally to the last block (110) of the blockchain structure (100), the last block (110) of the blockchain structure (100) including stored data;
• calculating a first block-dependent linking function (122) for bidirectionally linking the last block (110) to the additional block (112), the calculation of the linking function (122) comprising:

○ calculating a combined block-dependent check value of the last block and of the additional block (110, 112), using the data stored in the last block (110) and the data (210) to be stored in the additional block (112);
○ associating the combined check value with a block-independent, linking process-specific function;

• adding the first block-dependent linking function (122) to the last block (110);
• adding the first block-dependent linking function (122) to the additional block (112); and
• storing the blockchain structure (130) expanded by the additional block (112).

2. The method according to claim 1, wherein the last block (110) of the blockchain structure (100) furthermore comprises a second block-dependent linking function of the bidirectional concatenation of the last block (110) to the penultimate block (108) of the blockchain structure (100), the addition of the first block-dependent linking function (122) to the last block (110) comprising associating the first block-dependent linking function (122) with the second block-dependent linking function.

3. The method according to any one of the preceding claims, wherein the block-independent, linking process-specific function is a function of a family of functions, which comprises a plurality of block-independent, linking process-specific functions, an ordinal number being assigned to each function of the family of functions, and the functions of the family of functions, starting with a first ordinal number assigned to a first bidirectional concatenation of the bidirectionally linked blockchain structure (100) between a first block and a second block of the chain structure, according to a predefined assignment rule being intended to be individually assigned, in ascending order, to a bidirectional concatenation of two blocks of the bidirectionally linked blockchain structure (100) and to be used to calculate a linking function (122) dependent on the corresponding two blocks.

4. The method according to claim 3, wherein the block-independent, linking process-specific function comprises a polynomial of the M-th order, M being a natural number,
the block-independent, linking process-specific function in particular comprising an association of the polynomial of the M-th order with an exponential function, the exponent of the exponential function comprising a polynomial of the order greater than or equal to two.

5. The method according to any one of the preceding claims, wherein the calculation of the combined block-dependent check value of the last and of the additional blocks (110, 112) comprises applying a hash function to the data stored in the last block (110) and the data (210) to be stored in the additional block (112).

6. The method according to any one of claims 1 to 4, wherein the data in the blocks of the blockchain structure (100) is stored in each case in a square (TxT) matrix structure (160, 170), T being a natural number greater than or equal to two, the calculation of the combined block-dependent check value of the last block and of the additional block (110, 112) comprising:

   ◦ calculating a sum across each column (162) of a first matrix structure (160), which is provided by the two matrix structures (160, 170) of the data stored in the last block (110) and of the data (210) to be stored in the additional block (112);
   ◦ calculating a sum across each row (172) of a second matrix structure (170), which is provided by the two matrix structures (160, 170) of the data stored in the last block (110) and of the data (210) to be stored in the additional block (112);
   ◦ calculating the combined sum from the sum of the i-th column and the sum of the i-th row, i being a natural number and running from 1 to T; and
   ◦ forming the combined block-dependent check value by associating the combined sums with one another,
   an association of the combined sums with one another in particular comprising stringing together the combined sums.

7. The method according to any one of the preceding claims, wherein consecutive blocks of the bidirectionally linked blockchain structure (100) are each bidirectionally linked to one another, two blocks bidirectionally linked to one another in each case comprising a shared block-dependent linking function (122), the shared block-dependent linking function (122) in each case comprising a combined block-dependent check value of the data stored in the two consecutive blocks.

8. The method according to any one of the preceding claims, wherein the blockchain structure (100) is replaced by a shortened blockchain structure (150), the shortened blockchain structure (150) being shortened by at least one inner chain segment (142) of the blockchain structure (100), the inner chain segment (142) comprising at least one block.

9. The method according to claim 8, wherein the method furthermore comprises:

   • providing block-independent transformation functions, which are configured to transform the block-independent, linking process-specific functions of the block-dependent linking functions (122) into one another; and
   • checking the shortened blockchain structure (150) for consistency, the block-independent, linking process-specific functions of the block-dependent linking functions (122) of two directly neighboring blocks of the shortened blockchain structure (150) between which the inner chain segment (142) was removed being transformed into one another, using the transformation functions, and the transformation results being checked for consistency,
   the block-independent transformation functions in particular being configured, as increment operators, to transform each of the block-independent, linking process-specific functions of the block-dependent linking functions (122) into the next higher block-independent, linking process-specific function according to the ascending order and/or, as decrement operators, to transform each of the block-independent, linking process-specific functions of the block-dependent linking functions into a next lower block-independent, linking process-specific function according to the ascending order.

10. The method according to any one of the preceding claims, wherein the block-dependent linking function (122) $k_M(x)$ has the following form:

$$k_M(x)=g(D_N,D_{N+1})\, f_M(x)$$

where $g(D_N, D_{N+1})$ denotes the combined block-dependent check value of the N-th and (N+1)-th blocks of the blockchain structure (100), $D_N$ denotes the data stored in the N-th block, and $D_{N+1}$ denotes the data (210) to be stored in the (N+1)-th block,
the block-independent, linking process-specific function $f_M(x)$ having the following form:

$$f_M(x)=c\, H_M\!\left(\sqrt{b}\, x\right) e^{-\frac{1}{2}b\, x^2},$$

where M denotes a natural number, which is unambiguously assigned to the individual linking process, where b and c are each an established parameter, and x denotes a variable, and $H_M(x)$ denoting a Hermite polynomial having the following form:

$$H_M\!\left(\sqrt{b}\, x\right)=(-1)^M e^{b\, x^2}\frac{d^M}{d(\sqrt{b}\, x)^M}\left(e^{-b\, x^2}\right).$$

11. The method according to claim 10, wherein the transformation functions comprise an increment operator having the form:

$$\hat{a}^\dagger=\sqrt{\frac{b}{2}}\left(x\text{-}b^{-1}\frac{d}{dx}\right)$$

and a decrement operator having the form:

$$\hat{a}=\sqrt{\frac{b}{2}}\left(x+b^{-1}\frac{d}{dx}\right)$$

and consistency exists between the N-th and the (N+L)-th blocks between which an inner chain segment (142) including the blocks N+1 through N+L-1 was removed, if

$$\frac{\left(\hat{a}^\dagger\right)^{L-1}k_M(x)}{k_{M+L-1}(x)}=\frac{c\, k_M(x)}{(\hat{a})^{L-1}k_{M+L-1}(x)}$$

applies, where c is a constant.

12. The method according to any one of the preceding claims, wherein the data (210) to be stored includes data that is characteristic of the content of a digitally encoded document, the provision of the data (210) to be stored including receiving the data by way of a communication interface (214) via a network (240) from a computer system (250) creating the digitally encoded document, the method furthermore comprising:

• receiving a request for a current version of the blockchain structure (100) by way of the communication interface (214) via the network (240) from a requesting computer system (220); and
• transmitting the expanded blockchain structure (130) by way of the communication interface (214) via the network (240) to the requesting computer system (220) in response to the received request, or

wherein the data (210) to be stored includes data of a transaction, the provision of the data (210) to be stored including receiving the data by way of a communication interface (214) via a network (240) from a computer system (250) involved in the execution of the transaction, the method furthermore comprising:

• receiving a request for a current version of the blockchain structure (100) by way of the communication interface (214) via the network (240) from a requesting computer system (220); and
• transmitting the expanded blockchain structure (130) by way of the communication interface (214) via the network (240) to the requesting computer system (220) in response to the received request, or

wherein the data (210) to be stored includes status data of a device, the provision of the data (210) to be stored including receiving the data by way of a communication interface (214) via a network (240) from a computer system (250) detecting the status data by way of a sensor, the method furthermore comprising:

• receiving a request for a current version of the blockchain structure (100) by way of the communication interface (214) via the network (240) from a requesting computer system (250); and
• transmitting the expanded blockchain structure (130) by way of the communication interface (214) via the network (240) to the requesting computer system (250) in response to the received request, or

wherein the data (210) to be stored includes data characterizing a processing operation of a digitally encoded document, the provision of the blockchain structure (100) including receiving the document to be processed, which includes the blockchain structure (100), and reading out the blockchain structure (100) from the received document, the provision of the data (210) to be stored including processing the received document and generating the data, and the storage of the expanded blockchain structure (100) including adding the expanded blockchain structure (130) to the processed document and storing the processed document including the expanded blockchain structure (130),
the method in particular furthermore comprising:

• receiving a request for the processed document by way of a communication interface (214) via a network (240) from a requesting computer system (220); and
• transmitting the processed document including the expanded blockchain structure (130) by way of the communication interface (214) via the network (240) to the requesting computer system (220) in response to the received request.

13. An electronic data storage system (200) for storing data (210) in a tamper-proof manner in a bidirectionally linked blockchain structure (100), wherein the data storage system comprises a processor (202) and an electronic storage device (206) including machine-readable instructions (204), an execution of the machine-readable instructions (204) by the processor (202) prompting the data storage system (200) to execute a method, comprising:

• providing the bidirectionally linked blockchain structure (100);
• providing the data (210) to be stored;
• generating an additional block (112) for expanding the blockchain structure (100), which includes the data (210) to be stored and is intended to be linked bidirectionally to the last block (110) of the blockchain structure (100), the last block (110) of the blockchain structure (100) including stored data;
• calculating a block-dependent linking function (122) for bidirectionally linking the last block (110) to the additional block (112), the calculation of the linking function (122) comprising:

◦ calculating a combined block-dependent check value of the last block and of the additional block (110, 112), using the data stored in the last block (110) and the data (210) to be stored in the additional block (112);
◦ associating the combined check value with a block-independent, linking process-specific function;

• adding the block-dependent linking function (122) to the last block (110);
• adding the block-dependent linking function (122) to the additional block (112); and
• storing the blockchain structure (130) expanded by the additional block (112).

**14.** A telecommunications system, comprising an electronic data storage system (200) according to claim 13 and a communication interface (214) for communicating via a network (240), wherein the provision of the data (210) to be stored includes receiving the data by way of a communication interface (214) via a network (240), the executed method furthermore comprising:

• receiving a request for a current version of the blockchain structure (100) by way of the communication interface (214) via the network (240) from a requesting telecommunications system (220); and
• transmitting the expanded blockchain structure (130) by way of the communication interface (214) via the network (240) to the requesting telecommunications system (220) in response to the received request.

**15.** A telecommunications system, comprising an electronic data storage system (200) according to claim 13 and a communication interface (214) for communicating via a network (240), wherein the data (210) to be stored includes data characterizing a processing operation of a digitally encoded document, the provision of the blockchain structure (100) including receiving the document to be processed, which includes the blockchain structure (100), and reading out the blockchain structure (100) from the received document, the provision of the data (210) to be stored including processing the received document and generating the data,
the storage of the expanded blockchain structure (130) including adding the expanded blockchain structure (130) to the processed document and storing the processed document including the expanded blockchain structure (130),
the executed method furthermore comprising:

• receiving a request for the processed document by way of the communication interface (214) via the network (240) from a requesting telecommunications system (220); and
• transmitting the processed document including the expanded blockchain structure (130) by way of the communication interface (214) via the network (240) to the requesting telecommunications system (220) in response to the received request.

## Revendications

**1.** Procédé d'enregistrement de données sécurisé contre les manipulations dans une mémoire électronique moyennant l'emploi d'une structure de chaîne de blocs (100) concaténée de manière bidirectionnelle, le procédé comprenant :

• la mise au point d'une structure de chaîne de blocs (100) concaténée de manière bidirectionnelle,
• la mise au point des données (210) à enregistrer,
• la création d'un bloc supplémentaire (112) permettant d'élargir la structure de chaîne de blocs (100), lequel comprend les données (210) devant être enregistrées et est prévu pour être concaténé de manière bidirectionnelle avec le dernier bloc (110) de la structure de chaîne de blocs (100), où le dernier bloc (110) de la structure de chaîne de blocs (100) comprend des données enregistrées,
• le calcul d'une première fonction de concaténation (122) dépendante du bloc pour la concaténation bidirectionnelle du dernier bloc (110) avec le bloc supplémentaire (112), où le calcul de la fonction de concaténation (122) comprend :

◦ le calcul d'une valeur de contrôle dépendante du bloc combinée du dernier et du bloc supplémentaire (110, 112) moyennant l'emploi des données enregistrées dans le dernier bloc (110) et des données (210) à enregistrer dans le bloc supplémentaire (112),
◦ l'association de la valeur de contrôle combinée avec une fonction indépendante du bloc et individualisée pour le processus de concaténation,

• l'ajout de la première fonction de concaténation (122)) dépendante du bloc au dernier bloc (110),
• l'ajout de la première fonction de concaténation (122) dépendante du bloc au bloc supplémentaire (112),
• l'enregistrement de la structure de chaîne de blocs (130) élargie avec le bloc supplémentaire (112).

**2.** Procédé selon la revendication 1, dans lequel le dernier bloc (110) de la structure de chaîne de blocs (100) comprend en outre une deuxième fonction de concaténation dépendante du bloc de la concaténation bidirectionnelle du dernier bloc (110) avec un avant-dernier bloc (108) de la structure de chaine de blocs (100),
dans lequel l'ajout de la première fonction de concaténation (122) dépendante du bloc au dernier bloc (110) comprend une association de la première fonction de concaténation (122) dépendante du bloc avec la deuxième fonction de concaténation dépendante du bloc.

**3.** Procédé selon l'une des revendications précédentes, dans lequel la fonction indépendante du bloc et individualisée pour le processus de concaténation est une fonction d'une masse de fonctions, laquelle comprend une multiplicité de fonctions indépendantes du bloc et individualisées pour le processus de concaténation, où un numéro d'ordre est respectivement associé à chaque fonction de la masse de fonctions et les fonctions de la masse de fonctions commençant avec un premier numéro d'ordre, lequel est associé à une première concaténation bidirectionnelle de la structure de chaine de blocs (100) concaténée de manière bidirectionnelle entre un premier bloc et un deuxième bloc de la structure de chaine selon une règle d'attribution prédéfinie, est prévu pour être associé, dans l'ordre croissant, respectivement individuellement à une concaténation bidirectionnelle de deux blocs de la structure de chaine de blocs (100) concaténée de manière bidirectionnelle et être employé pour le calcul d'une fonction de concaténation (122) dépendante des deux blocs correspondants.

**4.** Procédé selon la revendication 3, dans lequel la fonction indépendante du bloc et individualisée pour le processus de concaténation comprend un polynôme d'ordre M, où M est un nombre naturel,
dans lequel la fonction indépendante du bloc et individualisée pour le processus de concaténation comprend en particulier une association du polynôme d'ordre M avec une fonction exponentielle, où l'exposant de la fonction exponentielle comprend un polynôme d'ordre égal ou supérieur à deux.

**5.** Procédé selon l'une des revendications précédentes, dans lequel le calcul de la valeur de contrôle dépendante du bloc combinée du dernier et du bloc supplémentaire (110, 112) comprend l'utilisation d'une fonction de hachage pour les données enregistrées dans le dernier bloc (110) et des données (210) à enregistrer dans le bloc supplémentaire (112).

**6.** Procédé selon l'une des revendications 1 à 4, dans lequel les données sont enregistrées dans les blocs de la structure de chaine de blocs (100), respectivement dans une structure de matrice quadratique (TxT) (160, 170), où T est un nombre naturel égal ou supérieur à deux, où le calcul de la valeur de contrôle dépendante du bloc combinée du dernier et du bloc supplémentaire (110, 112) comprend :

○ le calcul d'une somme, sur chaque colonne (162) d'une première structure de matrice (160), laquelle est fournie par les deux structures de matrice (160, 170), des données enregistrées dans le dernier bloc (110) et des données (210) à enregistrer dans le bloc supplémentaire (112),
○ le calcul d'une somme, sur chaque rangée (172) d'une deuxième structure de matrice (170), laquelle est fournie par les deux structures de matrice (160, 170), des données enregistrées dans le dernier bloc (110) et des données (210) à enregistrer dans le bloc supplémentaire (112),
○ le calcul de la somme combinée à partir de la somme de la $i^{ème}$ colonne et de la somme de la $i^{ème}$ rangée, où i est un nombre naturel et va de 1 à T,
○ la formation d'une valeur de contrôle dépendante du bloc combinée par l'association des sommes combinées l'une avec l'autre,
dans lequel une association des sommes combinées comprend notamment une accumulation des sommes combinées.

**7.** Procédé selon l'une des revendications précédentes, dans lequel des blocs successifs de la structure de chaine de blocs (100) concaténée de manière bidirectionnelle sont respectivement concaténés les uns aux autres de manière bidirectionnelle, où deux blocs concaténés l'un avec l'autre de manière bidirectionnelle comprennent respectivement une fonction de concaténation (122) dépendante du bloc commune, où la fonction de concaténation (122) dépendante du bloc commune comprend respectivement une valeur de contrôle dépendante du bloc combinée des données enregistrées dans les deux blocs successifs.

**8.** Procédé selon l'une des revendications précédentes, dans lequel la structure de chaine de blocs (100) est remplacée par une structure de chaine de blocs (150) raccourcie, où la structure de chaine de blocs (150) raccourcie est raccourci d'au moins un segment de concaténation (142) interne de la structure de chaine de blocs (100), où le segment de concaténation (142) interne comprend au moins un bloc.

**9.** Procédé selon la revendication 8, le procédé comprenant en outre :

• la mise au point de fonctions de transformation indépendantes des blocs, lesquelles sont conçues pour transformer les fonctions individualisées pour le processus de concaténation indépendantes des blocs des fonctions de concaténation (122) dépendantes des blocs les unes dans les autres,
• la vérification de la consistance de la structure de chaine de blocs (150) raccourcie, où les fonctions individualisées pour le processus de concaténation indépendantes du bloc des fonctions de concaténation (122) dépendantes des blocs de deux blocs directement voisins de la structure de chaine de blocs (150) raccourcie entre lesquels le segment de concaténation (142) interne a été prélevé, sont transformées les unes dans les autres moyennant l'emploi des fonctions de transformation et les résultats de la transformation sont vérifiés au niveau de leur consistance,

dans lequel les fonctions de transformation indépendantes des blocs sont en particulier conçues pour transformer les fonctions individualisées pour le processus de concaténation et indépendantes des blocs des fonctions de concaténation (122) dépendantes des blocs respectivement en opérateurs d'ascension dans une fonction individualisée pour le processus de concaténation indépendante des blocs la plus proche croissante selon le classement croissant, et/ou transformer les fonctions individualisées pour le processus de concaténation indépendantes des blocs des fonctions de concaténation dépendantes des blocs en opérateurs de descente respectivement dans une fonction individualisée pour le processus de concaténation dépendante du bloc la plus proche décroissante selon le classement croissant.

**10.** Procédé selon l'une des revendications précédentes, dans lequel la fonction de concaténation (122) dépendante du bloc $K_M(x)$ présente la forme suivante :

$$K_M(x) = g(D_N, D_{N+1}) f_M(x)$$

où $g(D_N, D_{N+1})$ désigne la valeur de contrôle dépendante du bloc combinée du $N^{ième}$ et du $N+1^{ième}$ bloc de la structure de chaine de blocs (100), $D_N$ désigne les données enregistrées dans le $N^{ième}$ bloc et $D_{N+1}$ désigne les données (210) à enregistrer dans le $(N+1)^{ième}$ bloc, dans lequel la fonction individualisée pour le processus de concaténation indépendante du bloc $f_M(x)$ présente la forme suivante :

$$f_M(x) = c\, H_M\!\left(\sqrt{b}\, x\right)\, e^{-\frac{1}{2} b\, x^2}$$

où M désigne un nombre naturel, lequel est associé de manière précise au processus de concaténation individuel, où b et c désignent respectivement un paramètre prédéfini et x désigne une variable, et où $H_M\!\left(\sqrt{b}\, x\right)$ désigne un polynôme hermitien avec la forme suivante :

$$H_M\!\left(\sqrt{b}\, x\right) = (-1)^M e^{b\, x^2} \frac{d^M}{d\left(\sqrt{b}\, x\right)^M}\left(e^{-b\, x^2}\right)$$

.

**11.** Procédé selon la revendication 10, dans lequel les fonctions de transformation comprennent un opérateur d'ascension de la forme :

$$\hat{a}^{\dagger} = \sqrt{\frac{b}{2}}\left(x - b^{-1}\frac{d}{dx}\right)$$

et un opérateur de descente de la forme :

$$\hat{a} = \sqrt{\frac{b}{2}}\left(x + b^{-1}\frac{d}{dx}\right)$$

et la consistance est donnée entre le $N^{ième}$ et le $(N+L)^{ième}$ bloc, entre lesquels un segment de concaténation (142) interne avec les blocs $N+1$ à $N+L$ a été prélevé, dans le cas où

$$\frac{\left(\hat{a}^{\dagger}\right)^{L-1} k_M(x)}{k_{M+L-1}(x)} = \frac{c\, k_M(x)}{(\hat{a})^{L-1}\, k_{M+L-1}(x)}$$

est valide, où c est une constante.

**12.** Procédé selon l'une des revendications précédentes, dans lequel les données (210) à enregistrer comprennent des données, lesquelles sont caractéristiques pour le contenu d'un document codé numériquement, où la préparation des données (210) à enregistrer comprend la réception des données au moyen d'une interface de communication (214) par le biais d'un réseau (240) à partir d'un système informatique (250) établissant le document codé numériquement, le procédé comprenant en outre :

- la réception d'une demande pour une version actuelle de la structure de chaine de blocs (100) au moyen de l'interface de communication (214) par le biais du réseau (240) par un système informatique (220) demandeur,
- l'envoi de la structure de chaine de blocs (130) élargie au moyen de l'interface de communication (214) par le biais du réseau (240) au système informatique (220) demandeur en réponse à la demande reçue, ou

dans lequel les données (210) à enregistrer comprennent des données d'une transaction, où la préparation des données (210) à enregistrer comprend la réception des données au moyen d'une interface de communication (214) par le biais d'un réseau (240) par un système informatique (250) impliqué dans l'exécution de la transaction, le procédé comprenant en outre :

- la réception d'une demande pour une version actuelle de la structure de chaine de blocs (100) au moyen de l'interface de communication (214) par le biais du réseau (240) par un système informatique (220) demandeur,
- l'envoi de la structure de chaine de blocs (130) élargie au moyen de l'interface de communication (214) par le biais du réseau (240) au système informatique (220) demandeur en réponse à la demande reçue, ou

dans lequel les données (210) à enregistrer comprennent des données d'état d'un dispositif, où la préparation des données (210) à enregistrer comprend la réception des données au moyen d'une l'interface de communication (214) par le biais d'un réseau (240) par un système informatique (250) saisissant les données d'état au moyen d'un capteur, le procédé comprenant en outre :

- la réception d'une demande pour une version actuelle de la structure de chaine de blocs (100) au moyen de l'interface de communication (214) par le biais du réseau (240) par un système informatique (250) demandeur,
- l'envoi de la structure de chaine de blocs (130) élargie au moyen de l'interface de communication (214) par le biais du réseau (240) au système informatique (250) demandeur en réponse à la demande reçue, ou

dans lequel les données (210) à enregistrer comprennent des données, lesquelles caractérisent un processus de traitement d'un document codé numériquement, où la préparation de la structure de chaine de blocs (100) comprend la réception du document à traiter, lequel est compris dans la structure de chaine de blocs (100), et la lecture de la structure en chaine de blocs (100) à partir du document reçu, où la préparation des données (210) à enregistrer comprend le traitement du document reçu et la création des données, où l'enregistrement de la structure de chaîne de blocs (130) élargie comprend un ajout de la structure en chaine de blocs (100) au document à traiter et un enregistrement du document à traiter avec la structure en chaine de blocs (130) élargie, le procédé comprenant en outre :

- la réception d'une demande pour le document à traiter au moyen d'une interface de communication (214) par le biais d'un réseau (240) par un système informatique (220) demandeur,
- l'envoi du document à traiter avec la structure de chaine de blocs (130) élargie au moyen de l'interface de communication (214) par le biais du réseau (240) au système informatique (220) demandeur en réponse à la demande reçue.

**13.** Système de stockage de données électronique (200) permettant l'enregistrement de données (210) sécurisé contre les manipulations dans une structure de chaîne de blocs (100) concaténée de manière bidirectionnelle, où le système de stockage de données comprend un processeur (202) et une mémoire électronique (206) dotée d'instructions (204) lisibles par machine, où l'exécution des instructions (204) lisibles par machine par le processeur (202) fait en sorte que le système de stockage de données (200) exécute un procédé, lequel comprend :

• la mise au point de la structure de chaîne de blocs (100) concaténée de manière bidirectionnelle,
• la mise au point des données (210) à enregistrer,
• la création d'un bloc supplémentaire (112) permettant d'élargir la structure de chaîne de blocs (100), lequel comprend les données (210) devant être enregistrées et est prévu pour être concaténé de manière bidirectionnelle avec le dernier bloc (110) de la structure de chaîne de blocs (100), où le dernier bloc (110) de la structure de chaîne de blocs (100) comprend des données enregistrées,
• le calcul d'une fonction de concaténation (122) dépendante du bloc pour la concaténation bidirectionnelle du dernier bloc (110) avec le bloc supplémentaire (112), où le calcul de la fonction de concaténation (122) comprend :

  ◦ le calcul d'une valeur de contrôle dépendante du bloc combinée du dernier bloc et du bloc supplémentaire (110, 112) moyennant l'emploi des données enregistrées dans le dernier bloc (110) et des données (210) à enregistrer dans le bloc supplémentaire (112),
  ◦ l'association de la valeur de contrôle combinée avec une fonction indépendante du bloc et individualisée pour le processus de concaténation,

• l'ajout de la première fonction de concaténation (122)) dépendante du bloc au dernier bloc (110),
• l'ajout de la première fonction de concaténation (122) dépendante du bloc au bloc supplémentaire (112),
• l'enregistrement de la structure de chaîne de blocs (130) élargie avec le bloc supplémentaire (112).

**14.** Système de télécommunication, lequel comprend un système de stockage de données électronique (200) selon la revendication 13 et une interface de communication (214) permettant de communiquer par le biais d'un réseau (240), où la préparation des données (210) à enregistrer comprend la réception des données au moyen d'une interface de communication (214) par le biais d'un réseau (240), le procédé exécuté comprenant en outre :

  • la réception d'une demande pour une version actuelle de la structure de chaine de blocs (100) au moyen de l'interface de communication (214) par le biais du réseau (240) par un système informatique (220) demandeur,
  • l'envoi de la structure de chaine de blocs (130) élargie au moyen de l'interface de communication (214) par le biais du réseau (240) au système informatique (220) demandeur en réponse à la demande reçue.

**15.** Système de télécommunication, lequel comprend un système de stockage de données électronique (200) selon la revendication 13 et une interface de communication (214) permettant de communiquer par le biais d'un réseau (240), où les données (210) à enregistrer comprennent des données, lesquelles caractérisent un processus de traitement d'un document codé numériquement, où la préparation de la structure de chaine de blocs (100) comprend la réception du document à traiter, lequel est compris dans la structure de chaine de blocs (100), et la lecture de la structure en chaîne de blocs (100) à partir du document reçu, où la préparation des données (210) à enregistrer comprend le traitement du document reçu et la création des données, où l'enregistrement de la structure de chaîne de blocs (130) élargie comprend un ajout de la structure en chaine de blocs (130) élargie au document à traiter et un enregistrement du document traité avec la structure de chaine de blocs (130) élargie, le procédé exécuté comprenant en outre :

  • la réception d'une demande pour le document traité au moyen de l'interface de communication (214) par le biais du réseau (240) par un système informatique (220) demandeur,
  • l'envoi du document traité avec la structure de chaine de blocs (130) élargie au moyen de l'interface de communication (214) par le biais du réseau (240) au système informatique (220) demandeur en réponse à la demande reçue.

EP 3 631 671 B1

Fig. 1

Fig. 2

| | |
|---|---|
| Bereitstellen Blockchain-Struktur | **400** |

↓

| | |
|---|---|
| Bereitstellen zu speichernde Daten | **402** |

↓

| | |
|---|---|
| Erzeugen zusätzlicher Block | **404** |

↓

| | |
|---|---|
| Berechnen blockabhängige Verkettungsfunktion | **406** |

↓

| | |
|---|---|
| Hinzufügen Verkettungsfunktion zu letztem Block | **408** |

↓

| | |
|---|---|
| Hinzufügen Verkettungsfunktion zu zusätzlichem Block | **410** |

↓

| | |
|---|---|
| Speichern der erweiterten Blockchain-Struktur | **412** |

## Fig. 3

Fig. 4

| | |
|---|---|
| Summieren über Spalten einer 1. Matrixstruktur | __500__ |

| | |
|---|---|
| Summieren über Zeilen einer 2. Matrixstruktur | __502__ |

| | |
|---|---|
| Berechnen kombinierter Summen | __504__ |

| | |
|---|---|
| Erstellen Prüfwert | __506__ |

Fig. 5

Fig. 6

| Computersystem | | 200 |
| Prozessor | | 202 |
| Instruktionen | | 204 |
| | | 206 |
| Speicher | | |
| Funktionen | | 208 |
| Daten | | 210 |
| Blockchain-Struktur | | 100 |
| Schnittstelle | | 214 |

Fig. 7

**Computersystem 2** ⌐220

**Prozessor** ⌐222
| Instruktionen | ⌐224

⌐226

**Speicher** ⌐208
| Funktionen |

⌐234
| Schnittstelle |

**Computersystem 1** ⌐200

**Prozessor** ⌐202
| Instruktionen | ⌐204

⌐206

**Speicher** ⌐208
| Funktionen |

⌐210
| Daten |

⌐100
| Blockchain-Struktur |

⌐214
| Schnittstelle |

240

Netzwerk

**Computersystem 3** ⌐250

**Prozessor** ⌐252
| Instruktionen | ⌐254

⌐256

**Speicher**
| Daten | ⌐210

⌐266
| Sensor |

⌐264
| Schnittstelle |

Fig. 8

40

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016161073 A1

- US 2016261690 A1

**In der Beschreibung aufgeführte Nicht-Patentliteratur**

- **JUAN GRARAY et al.** The Bitcoin Backbone Protocol: Analysis and Applications. *Advances in Cryptology - EUROCRYPT 2015,* 26. April 2015